# EUROPEAN PATENT APPLICATION

(11) **EP 4 329 364 A1**
(43) Date of publication of application: **28.02.2024**
(21) Application number: 22794471.7
(22) Date of filing: 29.03.2022
(51) Int. Cl.: H04W 28/02

(54) **DATA TRANSMISSION METHOD AND APPARATUS**

(30) Priority: 30.04.2021 CN 202110487916
(71) Applicant: Huawei Technologies Co., Ltd., Shenzhen, Guangdong 518129 (CN)
(72) Inventor: ZHANG, Haisen, Shenzhen, Guangdong 518129 (CN); XIN, Tingyu, Shenzhen, Guangdong 518129 (CN); WANG, Yan, Shenzhen, Guangdong 518129 (CN); LI, Bingzhao, Shenzhen, Guangdong 518129 (CN); XU, Bin, Shenzhen, Guangdong 518129 (CN)
(74) Representative: Pfenning, Meinig & Partner mbB
(86) International application number: PCT/CN2022/083849
(87) International publication number: WO 2022/227998

(57) **Abstract**

A data transmission method and an apparatus are provided, relate to the field of communications technologies, and can reduce signaling overheads for reporting a status report and save resources during MBS data transmission. The method includes: A distributed unit DU receives a first packet data convergence protocol PDCP packet data unit PDU from a central unit CU, where the first PDCP PDU carries data of a multicast broadcast service MBS. The DU sends the first PDCP PDU to at least two terminal devices. The DU sends a status report to the CU, where the status report indicates results of sending the first PDCP PDU to the at least two terminal devices.

## Description

This application claims priority to Chinese Patent Application No. 202110487916.4, filed with the China National Intellectual Property Administration on April 30, 2021 and entitled "DATA TRANSMISSION METHOD AND APPARATUS", which is incorporated herein by reference in its entirety.

### TECHNICAL FIELD

This application relates to the field of communication technologies, and in particular, to a data transmission method and an apparatus.

### BACKGROUND

A multicast broadcast service (multicast broadcast service, MBS) is a service oriented to a plurality of user equipments (user equipments, UEs), such as live broadcast or scheduled program playing. There are two transmission modes when data of the MBS is sent from an access network device to a terminal device. A first transmission mode is a point-to-multipoint (point-to-multipoint, PTM) transmission mode, and a second transmission mode is a point-to-point (point-to-point, PTP) transmission mode.

In a 5th generation mobile communication technology (the 5th Generation mobile communication technology, 5G) system, a central unit (central unit, CU)-distributed unit (distributed unit, DU) split base station architecture is introduced. When a packet data convergence protocol (packet data convergence protocol, PDCP) protocol data unit (protocol data unit, PDU) is transmitted in the CU-DU architecture, the DU reports a downlink data delivery status (downlink data delivery status, DDDS) to the CU, to notify a sending result of the PDCP PDU to the DU, so that the CU performs data flow control (flow control). However, in an existing DDDS reporting solution, for the MBS, there are large signaling overheads, and a resource waste is caused.

### SUMMARY

Embodiments of this application provide a data transmission method and an apparatus, to reduce signaling overheads for reporting a status report and save resources during MBS data transmission.

According to a first aspect, a data transmission method is provided. The method includes: A distributed unit DU receives a first packet data convergence protocol PDCP packet data unit PDU from a central unit CU, where the first PDCP PDU carries data of a multicast broadcast service MBS. The DU sends the first PDCP PDU to at least two terminal devices. The DU sends a status report to the CU, where the status report indicates results of sending the first PDCP PDU to the at least two terminal devices.

Based on the foregoing technical solution, when the DU receives the first PDCP PDU from the CU, and the first PDCP PDU carries the data of the MBS, the DU sends the first PDCP PDU to the at least two terminal devices, and sends the status report to the CU, where the status report indicates the results of sending the first PDCP PDU to the at least two terminal devices. Therefore, when the data of the MBS is transmitted, signaling overheads for status report reporting are reduced, and resources are saved.

In a possible design, the status report indicates the result of sending the first PDCP PDU to each of the at least two terminal devices. Based on this design, the terminal devices share the status report, thereby reducing signaling overheads.

In a possible design, that the DU sends the first PDCP PDU to at least two terminal devices includes: The DU sends the first PDCP PDU to the at least two terminal devices by using a radio link control RLC unacknowledged mode UM.

In a possible design, that the DU sends the first PDCP PDU to at least two terminal devices includes: The DU sends the first PDCP PDU to the at least two terminal devices in a point-to-multipoint PTM mode.

In a possible design, that the DU sends the first PDCP PDU to at least two terminal devices includes: The DU sends the first PDCP PDU to a first terminal device in the at least two terminal devices by using an RLC acknowledged mode AM, where the first terminal device includes at least one terminal device. The DU sends the first PDCP PDU to a second terminal device in the at least two terminal devices by using an RLC UM, where the second terminal device includes at least one terminal device. The status report indicates the result of sending the first PDCP PDU to the first terminal device and the result of sending the first PDCP PDU to the second terminal device. Based on this design, the results for the terminal devices are in the status report, thereby reducing signaling overheads.

In a possible design, that the DU sends the first PDCP PDU to at least two terminal devices includes: The DU sends the first PDCP PDU to a first terminal device in the at least two terminal devices in a PTM mode, where the first terminal device includes at least one terminal device. The DU sends the first PDCP PDU to a second terminal device in the at least two terminal devices in a PTP mode, where the second terminal device includes at least one terminal device. The status report indicates the result of sending the first PDCP PDU to the first terminal device and the result of sending the first PDCP PDU to the second terminal device. Based on this design, the results for the terminal devices are in the status report, thereby reducing signaling overheads.

In a possible design, that the DU sends the first PDCP PDU to at least two terminal devices includes: The DU sends the first PDCP PDU to a first terminal device in the at least two terminal devices in a PTM mode, where the first terminal device includes at least one terminal device. The DU sends the first PDCP PDU to a second terminal device in the at least two terminal devices in a PTP mode, where the second terminal device includes at least one terminal device. The status report indicates only the result of sending the first PDCP PDU to the first terminal device. Based on this design, the result for the first terminal device is in the status report, thereby reducing signaling overheads.

In a possible design, that the DU sends a status report to the CU includes: The DU sends a first status report to the CU, where the first status report indicates the result of sending the first PDCP PDU to the first terminal device. The DU sends a second status report to the CU, where the second status report indicates the result of sending the first PDCP PDU to the second terminal device. That is, the status report may be implemented based on the two status reports. Based on this design, the first status report and the second status report may be separately sent, and the DU can send the status report without knowing results of different sending modes for all terminal devices, thereby improving status report sending efficiency.

In a possible design, the first status report carries first indication information, and the first indication information indicates that the first status report corresponds to a PTM mode. The second status report carries second indication information, and the second indication information indicates that the second status report corresponds to a PTP mode. Based on this design, the CU may determine, based on the first indication information, that the first status report is a combination of status reports of a plurality of terminal devices to which the DU sends the first PDCP PDU in the PTM mode, and may determine, based on the second indication information, that the second status report is a combination of status reports of a plurality of terminal devices to which the DU sends the first PDCP PDU in the PTP mode. When the CU determines the mode used by the DU to send the first PDCP PDU to the at least two terminal devices, the CU may determine, based only on the first indication information and/or the second indication information, whether the received status report is complete, to be specific, whether the status report is a combination of status reports of all terminal devices to which the DU sends the first PDCP PDU, and whether the CU needs to wait for another status report.

In a possible design, the first status report carries ninth indication information, and the ninth indication information indicates that the first status report corresponds to the RLC AM. The second status report carries tenth indication information, and the tenth indication information indicates that the second status report corresponds to an RLC UM mode. Based on this design, the CU may determine, based on the ninth indication information, that the first status report is a combination of status reports of a plurality of terminal devices to which the DU sends the first PDCP PDU by using the RLC AM, and may determine, based on the tenth indication information, that the second status report is a combination of status reports of a plurality of terminal devices to which the DU sends the first PDCP PDU by using the RLC UM. When the CU determines the mode used by the DU to send the first PDCP PDU to the at least two terminal devices, the CU may determine, based only on the ninth indication information and/or the tenth indication information, whether the received status report is complete, to be specific, whether the status report is a combination of status reports of all terminal devices to which the DU sends the first PDCP PDU, and whether the CU needs to wait for another status report.

In a possible design, that the DU sends a first status report to the CU includes: The DU sends a sixth status report to the CU, where the sixth status report indicates a result of delivering, in sequence, the first PDCP PDU to the at least one terminal device that is in the first terminal device. The DU sends a seventh status report to the CU, where the seventh status report indicates a result of delivering, out of sequence, the first PDCP PDU to the at least one terminal device that is in the first terminal device. That is, the first status report may be implemented based on the two status reports, thereby improving status report sending efficiency.

In a possible design, the sixth status report carries eleventh indication information, and the eleventh indication information indicates that the sixth status report is a combination of status reports of terminal devices that use an in-sequence RLC AM and that are in the first terminal device. The seventh status report carries twelfth indication information, and the twelfth indication information indicates that the seventh status report is a combination of status reports of terminal devices that use an out-of-sequence RLC AM and that are in the first terminal device.

In a possible design, the sixth status report carries thirteenth indication information, and the thirteenth indication information indicates whether the sixth status report includes status reports of all terminal devices that are in the first terminal device; and/or the seventh status report carries thirteenth indication information, and the thirteenth indication information indicates whether the seventh status report includes status reports of all terminal devices that are in the first terminal device. Based on this design, the CU may determine, based on the thirteenth indication information, whether the received sixth status report and/or seventh status report are/is complete, in other words, whether the sixth status report and/or the seventh status report are/is a combination of the status reports of all the terminal devices that are in the first terminal device.

In a possible design, the first status report carries third indication information, and the third indication information indicates whether the first status report includes status reports of all terminal devices that are in the at least two terminal devices; and/or the second status report carries third indication information, and the third indication information indicates whether the second status report includes status reports of all terminal devices that are in the at least two terminal devices. Based on this design, when the DU determines, or the CU and the DU jointly determine a mode used by the DU to send the first PDCP PDU to the at least two terminal devices, the CU may determine, based on the third indication information, whether the first status report and/or the second status report are/is complete, in other words, whether the first status report and/or the second status report are/is a combination of status reports of all terminal devices to which the DU sends the first PDCP PDU.

In a possible design, the status report carries fourth indication information, and the fourth indication information indicates that the status report corresponds to the RLC UM.

In a possible design, the status report carries first indication information, and the first indication information indicates that the status report corresponds to the PTM mode.

In a possible design, the status report carries fifth indication information, and the fifth indication information indicates a desired buffer size of a radio bearer RB associated with the MBS; the first status report carries fifth indication information, and the fifth indication information indicates a desired buffer size of an RB associated with the MBS; and/or the second status report carries fifth indication information, and the fifth indication information indicates a desired buffer size of an RB associated with the MBS. Based on this design, the CU may determine, based on the fifth indication information, the desired buffer size of the RB associated with the MBS.

In a possible design, the status report carries sixth indication information, and the sixth indication information indicates a desired data rate; the first status report carries sixth indication information, and the sixth indication information indicates a desired data rate; and/or the second status report carries sixth indication information, and the sixth indication information indicates a desired data rate. Based on this design, the CU may determine the desired data rate based on the sixth indication information.

In a possible design, the first PDCP PDU includes one or more PDCP PDUs, the status report carries seventh indication information, and the seventh indication information indicates a highest sequence number SN of at least one PDCP PDU that is successfully sent by the DU and that is in the first PDCP PDU; and/or the first status report carries seventh indication information, and the seventh indication information indicates a highest SN of at least one PDCP PDU that is successfully sent by the DU and that is in the first PDCP PDU; and/or the second status report carries seventh indication information, and the seventh indication information indicates a highest SN of at least one PDCP PDU that is successfully sent by the DU and that is in the first PDCP PDU. Based on this design, the CU may determine, based on the seventh indication information, the highest SN of the at least one PDCP PDU that is successfully sent and that is in the first PDCP PDU.

In a possible design, the first PDCP PDU includes one or more PDCP PDUs, the status report carries eighth indication information, and/or the first status report carries eighth indication information, and/or the second status report carries eighth indication information. The eighth indication information indicates a quantity and a start SN of the at least one PDCP PDU that is successfully sent by the DU and that is in the first PDCP PDU, or the eighth indication information indicates a quantity and an end SN of the at least one PDCP PDU that is successfully sent by the DU and that is in the first PDCP PDU, or the eighth indication information indicates a start SN and an end SN of the at least one PDCP PDU that is successfully sent by the DU and that is in the first PDCP PDU, or the eighth indication information indicates a quantity, a start SN, and an end SN of the at least one PDCP PDU that is successfully sent by the DU and that is in the first PDCP PDU.

In a possible design, the status report carries a bitmap (bitmap), and the bitmap indicates the results of sending the first PDCP PDU to the at least two terminal devices; the first status report carries a bitmap, and the bitmap indicates the result of sending the first PDCP PDU to the first terminal device; and/or the second status report carries a bitmap, and the bitmap indicates the result of sending the first PDCP PDU to the second terminal device. Based on this design, the CU may determine, based on the bitmap, the highest SN of the at least one PDCP PDU that is successfully sent and that is in the first PDCP PDU. For PDCP PDUs carried on the MRB, different PDCP PDUs may separately correspond to the PTP mode and the PTM mode. Therefore, feeding back a PDCP PDU sending status based on the bitmap can avoid the following problem: When a highest SN indicated in a status report corresponding to the PTP mode and a highest SN indicated in a status report corresponding to the PTM mode are not the same, the CU cannot determine which highest SN is to be used, and it is difficult to make a decision.

In a possible design, the method further includes: The DU sends a third status report to the CU, where the third status report is a status report dedicated to feeding back the desired buffer size of the RB associated with the MBS; the DU sends a fourth status report to the CU, where the fourth status report is a status report dedicated to feeding back the desired data rate; and/or the DU sends a fifth status report to the CU, where the fifth status report is a status report dedicated to feeding back the desired buffer size of the RB associated with the MBS and the desired data rate. Based on this design, for related information irrelevant to the terminal device, the DU may feed back the information by using a status report that is dedicated to feeding back the information. Based on this design, the CU may determine, based on the third status report, the status report of the desired buffer size of the RB associated with the MBS, and determine the desired data rate based on the fourth status report; or may determine, based on the fifth status report, the desired buffer size of the RB associated with the MBS and the desired data rate.

In a possible design, that the DU sends a status report to the CU includes: The DU sends the status report to the CU through a first channel, where the first channel is a general packet radio service tunneling protocol GTP-user plane U tunnel shared by a plurality of terminal devices. Alternatively, the DU sends the status report to the CU through a second channel, where the second channel is a GTP-U tunnel dedicated to a single terminal device. Based on this design, the DU may select a proper status report composition manner and a proper status report reporting manner based on a GTP-U tunnel establishment status.

According to a second aspect, a data transmission method is provided, and includes: A CU sends a first PDCP PDU to a DU, where the first PDCP PDU carries data of an MBS. The CU receives a status report from the DU, where the status report indicates results of sending the first PDCP PDU to at least two terminal devices.

In a possible design, the status report indicates the result of sending the first PDCP PDU to each of the at least two terminal devices.

In a possible design, that the CU receives a status report from the DU includes: The CU receives a first status report from the DU, where the first status report indicates the result of sending the first PDCP PDU to a first terminal device in the at least two terminal devices, and the first terminal device includes at least one terminal device. The CU receives a second status report from the DU, where the second status report indicates the result of sending the first PDCP PDU to a second terminal device in the at least two terminal devices, and the second terminal device includes at least one terminal device.

In a possible design, the first status report carries first indication information, and the first indication information indicates that the first status report corresponds to a PTM mode. The second status report carries second indication information, and the second indication information indicates that the second status report corresponds to a PTP mode.

In a possible design, the first status report carries ninth indication information, and the ninth indication information indicates that the first status report corresponds to an RLC AM. The second status report carries tenth indication information, and the tenth indication information indicates that the second status report corresponds to an RLC UM mode.

In a possible design, that the DU sends a first status report to the CU includes: The DU sends a sixth status report to the CU, where the sixth status report indicates a result of delivering, in sequence, the first PDCP PDU to the at least one terminal device that is in the first terminal device. The DU sends a seventh status report to the CU, where the seventh status report indicates a result of delivering, out of sequence, the first PDCP PDU to the at least one terminal device that is in the first terminal device.

In a possible design, the sixth status report carries eleventh indication information, and the eleventh indication information indicates that the sixth status report is a combination of status reports of terminal devices that use an in-sequence RLC AM and that are in the first terminal device. The seventh status report carries twelfth indication information, and the twelfth indication information indicates that the seventh status report is a combination of status reports of terminal devices that use an out-of-sequence RLC AM and that are in the first terminal device.

In a possible design, the sixth status report carries thirteenth indication information, and the thirteenth indication information indicates whether the sixth status report includes status reports of all terminal devices that are in the first terminal device; and/or the seventh status report carries thirteenth indication information, and the thirteenth indication information indicates whether the seventh status report includes status reports of all terminal devices that are in the first terminal device.

In a possible design, the first status report carries third indication information, and the third indication information indicates whether the first status report includes status reports of all terminal devices that are in the at least two terminal devices; and/or the second status report carries third indication information, and the third indication information indicates whether the second status report includes status reports of all terminal devices that are in the at least two terminal devices.

In a possible design, the status report carries fourth indication information, and the fourth indication information indicates that the status report corresponds to an RLC UM.

In a possible design, the status report carries first indication information, and the first indication information indicates that the status report corresponds to the PTM mode.

In a possible design, the status report carries fifth indication information, and the fifth indication information indicates a desired buffer size of an RB associated with the MBS; the first status report carries fifth indication information, and the fifth indication information indicates a desired buffer size of an RB associated with the MBS; and/or the second status report carries fifth indication information, and the fifth indication information indicates a desired buffer size of an RB associated with the MBS.

In a possible design, the status report carries sixth indication information, and the sixth indication information indicates a desired data rate; the first status report carries sixth indication information, and the sixth indication information indicates a desired data rate; and/or the second status report carries sixth indication information, and the sixth indication information indicates a desired data rate.

In a possible design, the first PDCP PDU includes one or more PDCP PDUs, the status report carries seventh indication information, and the seventh indication information indicates a highest SN of at least one PDCP PDU that is successfully sent by the DU and that is in the first PDCP PDU; the first status report carries seventh indication information, and the seventh indication information indicates a highest SN of at least one PDCP PDU that is successfully sent by the DU and that is in the first PDCP PDU; and/or the second status report carries seventh indication information, and the seventh indication information indicates a highest SN of at least one PDCP PDU that is successfully sent by the DU and that is in the first PDCP PDU.

In a possible design, the first PDCP PDU includes one or more PDCP PDUs, the status report carries eighth indication information, and/or the first status report carries eighth indication information, and/or the second status report carries eighth indication information. The eighth indication information indicates a quantity and a start SN of the at least one PDCP PDU that is successfully sent by the DU and that is in the first PDCP PDU, or the eighth indication information indicates a quantity and an end SN of the at least one PDCP PDU that is successfully sent by the DU and that is in the first PDCP PDU, or the eighth indication information indicates a start SN and an end SN of the at least one PDCP PDU that is successfully sent by the DU and that is in the first PDCP PDU, or the eighth indication information indicates a quantity, a start SN, and an end SN of the at least one PDCP PDU that is successfully sent by the DU and that is in the first PDCP PDU.

In a possible design, the status report carries a bitmap, and the bitmap indicates results of sending the first PDCP PDU to the at least two terminal devices; the first status report carries a bitmap, and the bitmap indicates a result of sending the first PDCP PDU to the first terminal device; and/or the second status report carries a bitmap, and the bitmap indicates a result of sending the first PDCP PDU to the second terminal device.

In a possible design, the method further includes: The CU receives a third status report from the DU, where the third status report is a status report dedicated to feeding back the desired buffer size of the RB associated with the MBS; the CU receives a fourth status report from the DU, where the fourth status report is a status report dedicated to feeding back the desired data rate; and/or the CU receives a fifth status report from the DU, where the fifth status report is a status report dedicated to feeding back the desired buffer size of the RB associated with the MB S and the desired data rate.

In a possible design, that the CU receives a status report from the DU includes: The CU receives the status report from the DU through a first channel, where the first channel is a general packet radio service tunneling protocol GTP-user plane U tunnel shared by a plurality of terminal devices. Alternatively, the CU sends the status report to the DU through a second channel, where the second channel is a GTP-U tunnel dedicated to a single terminal device.

In a possible design, the method further includes: The CU determines, based on the fifth indication information carried in the status report, the desired buffer size of the RB associated with the MBS; and/or determines the desired data rate based on the sixth indication information carried in the status report. Alternatively, the CU determines, based on the fifth indication information carried in the first status report or the fifth indication information carried in the second status report, the desired buffer size of the RB associated with the MBS, and/or the CU determines the desired data rate based on the sixth indication information carried in the first status or the sixth indication information carried in the second status report. Alternatively, the CU determines, based on a third status report, the desired buffer size of the RB associated with the MBS, and/or determines the desired data rate based on a fourth status report. Alternatively, the CU determines, based on a fifth status report, the desired buffer size of the RB associated with the MBS and/or the desired data rate.

In a possible design, the method further includes: The CU determines, based on the seventh indication information carried in the status report, the first status report, or the second status report, the highest SN of the at least one PDCP PDU that is successfully sent and that is in the first PDCP PDU. Alternatively, the CU determines, based on eighth indication information carried in the status report, the first status report, or the second status report, the highest SN of the at least one PDCP PDU that is successfully sent and that is in the first PDCP PDU. Alternatively, the CU determines, based on a bitmap carried in the status report, the first status report, or the second status report, the highest SN of the at least one PDCP PDU that is successfully sent and that is in the first PDCP PDU.

According to a third aspect, a communication apparatus is provided, and includes a communication module, where the communication module is configured to receive a first PDCP PDU from a CU, where the first PDCP PDU carries data of an MBS. The communication module is further configured to send the first PDCP PDU to at least two terminal devices. The communication module is further configured to send a status report to the CU, where the status report indicates results of sending the first PDCP PDU to the at least two terminal devices.

In a possible design, the status report indicates the result of sending the first PDCP PDU to each of the at least two terminal devices.

In a possible design, the communication module is further configured to send the first PDCP PDU to the at least two terminal devices by using an RLC UM.

In a possible design, the communication module is further configured to send the first PDCP PDU to the at least two terminal devices in a PTM mode.

In a possible design, the communication module is further configured to: send, by using an RLC acknowledged mode AM, the first PDCP PDU to a first terminal device in the at least two terminal devices, where the first terminal device includes at least one terminal device; and send the first PDCP PDU to a second terminal device in the at least two terminal devices by using an RLC UM, where the second terminal device includes at least one terminal device. The status report indicates the result of sending the first PDCP PDU to the first terminal device and the result of sending the first PDCP PDU to the second terminal device.

In a possible design, the communication module is further configured to: send the first PDCP PDU to a first terminal device in the at least two terminal devices in a PTM mode, where the first terminal device includes at least one terminal device; and send the first PDCP PDU to a second terminal device in the at least two terminal devices in a PTP mode, where the second terminal device includes at least one terminal device. The status report indicates the result of sending the first PDCP PDU to the first terminal device and the result of sending the first PDCP PDU to the second terminal device.

In a possible design, the communication module is further configured to: send the first PDCP PDU to a first terminal device in the at least two terminal devices in a PTM mode, where the first terminal device includes at least one terminal device; and send the first PDCP PDU to a second terminal device in the at least two terminal devices in a PTP mode, where the second terminal device includes at least one terminal device. The status report indicates only the result of sending the first PDCP PDU to the first terminal device.

In a possible design, the communication module is further configured to send a first status report to the CU, where the first status report indicates the result of sending the first PDCP PDU to the first terminal device. The communication module is further configured to send a second status report to the CU, where the second status report indicates the result of sending the first PDCP PDU to the second terminal device.

In a possible design, the first status report carries first indication information, and the first indication information indicates that the first status report corresponds to a PTM mode. The second status report carries second indication information, and the second indication information indicates that the second status report corresponds to a PTP mode.

In a possible design, the first status report carries ninth indication information, and the ninth indication information indicates that the first status report corresponds to the RLC AM. The second status report carries tenth indication information, and the tenth indication information indicates that the second status report corresponds to an RLC UM mode.

In a possible design, the communication module is further configured to send a sixth status report to the CU, where the sixth status report indicates a result of delivering, in sequence, the first PDCP PDU to the at least one terminal device that is in the first terminal device. The communication module is further configured to send a seventh status report to the CU, where the seventh status report indicates a result of delivering, out of sequence, the first PDCP PDU to the at least one terminal device that is in the first terminal device.

In a possible design, the sixth status report carries eleventh indication information, and the eleventh indication information indicates that the sixth status report is a combination of status reports of terminal devices that use an in-sequence RLC AM and that are in the first terminal device. The seventh status report carries twelfth indication information, and the twelfth indication information indicates that the seventh status report is a combination of status reports of terminal devices that use an out-of-sequence RLC AM and that are in the first terminal device.

In a possible design, the sixth status report carries thirteenth indication information, and the thirteenth indication information indicates whether the sixth status report includes status reports of all terminal devices that are in the first terminal device; and/or the seventh status report carries thirteenth indication information, and the thirteenth indication information indicates whether the seventh status report includes status reports of all terminal devices that are in the first terminal device.

In a possible design, the first status report carries third indication information, and the third indication information indicates whether the first status report includes status reports of all terminal devices that are in the at least two terminal devices; and/or the second status report carries third indication information, and the third indication information indicates whether the second status report includes status reports of all terminal devices that are in the at least two terminal devices.

In a possible design, the status report carries fourth indication information, and the fourth indication information indicates that the status report corresponds to the RLC UM.

In a possible design, the status report carries first indication information, and the first indication information indicates that the status report corresponds to the PTM mode.

In a possible design, the status report carries fifth indication information, and the fifth indication information indicates a desired buffer size of a radio bearer RB associated with the MBS; the first status report carries fifth indication information, and the fifth indication information indicates a desired buffer size of an RB associated with the MBS; and/or the second status report carries fifth indication information, and the fifth indication information indicates a desired buffer size of an RB associated with the MBS.

In a possible design, the status report carries sixth indication information, and the sixth indication information indicates a desired data rate; the first status report carries sixth indication information, and the sixth indication information indicates a desired data rate; and/or the second status report carries sixth indication information, and the sixth indication information indicates a desired data rate.

In a possible design, the first PDCP PDU includes one or more PDCP PDUs, the status report carries seventh indication information, and the seventh indication information indicates a highest sequence number SN of at least one PDCP PDU that is successfully sent by the DU and that is in the first PDCP PDU; the first status report carries seventh indication information, and the seventh indication information indicates a highest SN of at least one PDCP PDU that is successfully sent by the DU and that is in the first PDCP PDU; and/or the second status report carries seventh indication information, and the seventh indication information indicates a highest SN of at least one PDCP PDU that is successfully sent by the DU and that is in the first PDCP PDU.

In a possible design, the first PDCP PDU includes one or more PDCP PDUs, the status report carries eighth indication information, and/or the first status report carries eighth indication information, and/or the second status report carries eighth indication information. The eighth indication information indicates a quantity and a start SN of the at least one PDCP PDU that is successfully sent by the DU and that is in the first PDCP PDU, or the eighth indication information indicates a quantity and an end SN of the at least one PDCP PDU that is successfully sent by the DU and that is in the first PDCP PDU, or the eighth indication information indicates a start SN and an end SN of the at least one PDCP PDU that is successfully sent by the DU and that is in the first PDCP PDU, or the eighth indication information indicates a quantity, a start SN, and an end SN of the at least one PDCP PDU that is successfully sent by the DU and that is in the first PDCP PDU.

In a possible design, the status report carries a bitmap, and the bitmap indicates results of sending the first PDCP PDU to the at least two terminal devices; the first status report carries a bitmap, and the bitmap indicates a result of sending the first PDCP PDU to the first terminal device; and/or the second status report carries a bitmap, and the bitmap indicates a result of sending the first PDCP PDU to the second terminal device.

In a possible design, the communication module is further configured to send a third status report to the CU, where the third status report is a status report dedicated to feeding back the desired buffer size of the RB associated with the MBS; the communication module is further configured to send a fourth status report to the CU, where the fourth status report is a status report dedicated to feeding back the desired data rate; and/or the communication module is further configured to send a fifth status report to the CU, where the fifth status report is a status report dedicated to feeding back the desired buffer size of the RB associated with the MBS and the desired data rate.

In a possible design, the communication module is further configured to send the status report to the CU through a first channel, where the first channel is a general packet radio service tunneling protocol GTP-user plane U tunnel shared by a plurality of terminal devices. Alternatively, the communication module is further configured to send the status report to the CU through a second channel, where the second channel is a GTP-U tunnel dedicated to a single terminal device.

According to a fourth aspect, a communication apparatus is provided, and includes a communication module. The communication module is configured to send a first PDCP PDU to a DU, where the first PDCP PDU carries data of an MBS. The communication module is further configured to receive a status report from the DU, where the status report indicates results of sending the first PDCP PDU to at least two terminal devices.

In a possible design, the status report indicates the result of sending the first PDCP PDU to each of the at least two terminal devices.

In a possible design, the communication module is further configured to receive a first status report from the DU, where the first status report indicates the result of sending the first PDCP PDU to a first terminal device in the at least two terminal devices, and the first terminal device includes at least one terminal device. The communication module is further configured to receive a second status report from the DU, where the second status report indicates the result of sending the first PDCP PDU to a second terminal device in the at least two terminal devices, and the second terminal device includes at least one terminal device.

In a possible design, the first status report carries first indication information, and the first indication information indicates that the first status report corresponds to a PTM mode. The second status report carries second indication information, and the second indication information indicates that the second status report corresponds to a PTP mode.

In a possible design, the first status report carries ninth indication information, and the ninth indication information indicates that the first status report corresponds to an RLC AM. The second status report carries tenth indication information, and the tenth indication information indicates that the second status report corresponds to an RLC UM mode.

In a possible design, the communication module is further configured to receive a sixth status report from the DU, where the sixth status report indicates a result of delivering, in sequence, the first PDCP PDU to the at least one terminal device that is in the first terminal device. The communication module is further configured to receive a seventh status report from the DU, where the seventh status report indicates a result of delivering, out of sequence, the first PDCP PDU to the at least one terminal device that is in the first terminal device.

In a possible design, the sixth status report carries eleventh indication information, and the eleventh indication information indicates that the sixth status report is a combination of status reports of terminal devices that use an in-sequence RLC AM and that are in the first terminal device. The seventh status report carries twelfth indication information, and the twelfth indication information indicates that the seventh status report is a combination of status reports of terminal devices that use an out-of-sequence RLC AM and that are in the first terminal device.

In a possible design, the sixth status report carries thirteenth indication information, and the thirteenth indication information indicates whether the sixth status report includes status reports of all terminal devices that are in the first terminal device; and/or the seventh status report carries thirteenth indication information, and the thirteenth indication information indicates whether the seventh status report includes status reports of all terminal devices that are in the first terminal device.

In a possible design, the first status report carries third indication information, and the third indication information indicates whether the first status report includes status reports of all terminal devices that are in the at least two terminal devices; and/or the second status report carries third indication information, and the third indication information indicates whether the second status report includes status reports of all terminal devices that are in the at least two terminal devices.

In a possible design, the status report carries fourth indication information, and the fourth indication information indicates that the status report corresponds to an RLC UM.

In a possible design, the status report carries first indication information, and the first indication information indicates that the status report corresponds to the PTM mode.

In a possible design, the status report carries fifth indication information, and the fifth indication information indicates a desired buffer size of an RB associated with the MBS; the first status report carries fifth indication information, and the fifth indication information indicates a desired buffer size of an RB associated with the MBS; and/or the second status report carries fifth indication information, and the fifth indication information indicates a desired buffer size of an RB associated with the MBS.

In a possible design, the status report carries sixth indication information, and the sixth indication information indicates a desired data rate; the first status report carries sixth indication information, and the sixth indication information indicates a desired data rate; and/or the second status report carries sixth indication information, and the sixth indication information indicates a desired data rate.

In a possible design, the first PDCP PDU includes one or more PDCP PDUs, the status report carries seventh indication information, and the seventh indication information indicates a highest SN of at least one PDCP PDU that is successfully sent by the DU and that is in the first PDCP PDU; the first status report carries seventh indication information, and the seventh indication information indicates a highest SN of at least one PDCP PDU that is successfully sent by the DU and that is in the first PDCP PDU; and/or the second status report carries seventh indication information, and the seventh indication information indicates a highest SN of at least one PDCP PDU that is successfully sent by the DU and that is in the first PDCP PDU.

In a possible design, the first PDCP PDU includes one or more PDCP PDUs, the status report carries eighth indication information, and/or the first status report carries eighth indication information, and/or the second status report carries eighth indication information. The eighth indication information indicates a quantity and a start SN of the at least one PDCP PDU that is successfully sent by the DU and that is in the first PDCP PDU, or the eighth indication information indicates a quantity and an end SN of the at least one PDCP PDU that is successfully sent by the DU and that is in the first PDCP PDU, or the eighth indication information indicates a start SN and an end SN of the at least one PDCP PDU that is successfully sent by the DU and that is in the first PDCP PDU, or the eighth indication information indicates a quantity, a start SN, and an end SN of the at least one PDCP PDU that is successfully sent by the DU and that is in the first PDCP PDU.

In a possible design, the status report carries a bitmap, and the bitmap indicates results of sending the first PDCP PDU to the at least two terminal devices; the first status report carries a bitmap, and the bitmap indicates a result of sending the first PDCP PDU to the first terminal device; and/or the second status report carries a bitmap, and the bitmap indicates a result of sending the first PDCP PDU to the second terminal device.

In a possible design, the communication module is further configured to receive a third status report from the DU, where the third status report is a status report dedicated to feeding back the desired buffer size of the RB associated with the MBS; the communication module is further configured to receive a fourth status report from the DU, where the fourth status report is a status report dedicated to feeding back the desired data rate; and/or the communication module is further configured to receive a fifth status report from the DU, where the fifth status report is a status report dedicated to feeding back the desired buffer size of the RB associated with the MBS and the desired data rate.

In a possible design, the communication module is further configured to receive the status report from the DU through a first channel, where the first channel is a general packet radio service tunneling protocol GTP-user plane U tunnel shared by a plurality of terminal devices. Alternatively, the communication module is further configured to send the status report from the DU through a second channel, where the second channel is a GTP-U tunnel dedicated to a single terminal device.

In a possible design, the apparatus further includes a processing module. The processing module is configured to: determine, based on the fifth indication information carried in the status report, the desired buffer size of the RB associated with the MBS; and/or determine the desired data rate based on the sixth indication information carried in the status report. Alternatively, the processing module is further configured to: determine, based on the fifth indication information carried in the first status report or the fifth indication information carried in the second status report, the desired buffer size of the RB associated with the MBS, and/or determine the desired data rate based on the sixth indication information carried in the first status or the sixth indication information carried in the second status report. Alternatively, the processing module is further configured to: determine, based on a third status report, the desired buffer size of the RB associated with the MBS, and/or determine the desired data rate based on a fourth status report. Alternatively, the processing module is further configured to: determine, based on a fifth status report, the desired buffer size of the RB associated with the MBS and/or the desired data rate.

In a possible design, the processing module is further configured to: determine, based on the seventh indication information carried in the status report, the first status report, or the second status report, the highest SN of the at least one PDCP PDU that is successfully sent and that is in the first PDCP PDU. Alternatively, the processing module is further configured to determine, based on eighth indication information carried in the status report, the first status report, or the second status report, the highest SN of the at least one PDCP PDU that is successfully sent and that is in the first PDCP PDU. Alternatively, the processing module is further configured to determine, based on a bitmap carried in the status report, the first status report, or the second status report, the highest SN of the at least one PDCP PDU that is successfully sent and that is in the first PDCP PDU.

According to a fifth aspect, a communication apparatus is provided. The communication apparatus includes a processor and a transceiver, and the processor and the transceiver are configured to implement the method provided in any one of the first aspect, the second aspect, or designs of the first aspect and the second aspect. The processor is configured to perform a processing action in the corresponding method, and the transceiver is configured to perform a receiving/sending action in the corresponding method.

According to a sixth aspect, a computer-readable storage medium is provided. The computer-readable storage medium stores computer instructions. When the computer instructions are run on a computer, the computer is enabled to perform the method provided in any one of the first aspect, the second aspect, or designs of the first aspect and the second aspect.

According to a seventh aspect, a computer program product including computer instructions is provided. When the computer instructions are run on a computer, the computer is enabled to perform the method provided in any design of the first aspect and the second aspect.

According to an eighth aspect, a chip is provided, and includes a processor. When the processor executes instructions, the processor is configured to perform the method provided in any design of the first aspect and the second aspect.

According to a ninth aspect, a chip is provided. The chip includes a processing circuit and a transceiver pin. The processing circuit and the transceiver pin are configured to implement the method provided in any one of the first aspect, the second aspect, or designs of the first aspect and the second aspect. The processing circuit is configured to perform a processing action in the corresponding method, and the transceiver pin is configured to perform a receiving/sending action in the corresponding method.

According to a tenth aspect, a communication system is provided, and includes the communication apparatus provided in any one of the third aspect or the designs of the third aspect, and the communication apparatus provided in any one of the fourth aspect or the designs of the fourth aspect.

It should be noted that, for a technical effect brought by any design of the second aspect to the tenth aspect, refer to a technical effect brought by a corresponding design of the first aspect. Details are not described herein again.

### BRIEF DESCRIPTION OF DRAWINGS

FIG. 1 is a schematic diagram of an architecture of a data transmission system according to an embodiment of this application;
FIG. 2a is a schematic diagram of an architecture of a 4G base station according to an embodiment of this application;
FIG. 2b is a schematic diagram of an architecture of a 5G base station according to an embodiment of this application;
FIG. 3 is a schematic diagram of a CU-DU architecture divided based on a protocol stack according to an embodiment of this application;
FIG. 4 is a schematic diagram of a structure of a communication apparatus according to an embodiment of this application;
FIG. 5 is a schematic diagram of a structure of another communication apparatus according to an embodiment of this application;
FIG. 6 is a schematic diagram of an MBS transmission architecture according to an embodiment of this application;
FIG. 7 is a schematic flowchart of a data transmission method according to an embodiment of this application; and
FIG. 8 is a schematic diagram of a bitmap of a PDCP PDU according to an embodiment of this application.

### DESCRIPTION OF EMBODIMENTS

The following describes the technical solutions in embodiments of this application with reference to the accompanying drawings in embodiments of this application.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that the term "example", "for example", or the like in this application means is used as an example, an illustration, or a description. Any embodiment or design scheme described as "example" or "for example" in this application should not be explained as being more preferred or having more advantages than another embodiment or design scheme. Exactly, use of the word "example", "for example", or the like is intended to present a related concept in a specific manner.

In the descriptions of this application, the "indication" may include a direct indication and an indirect indication, or may include an explicit indication and an implicit indication. Information indicated by specific information is referred to as to-be-indicated information. In a specific implementation process, there are a plurality of manners of indicating the to-be-indicated information. For example, the to-be-indicated information may be directly indicated based on the to-be-indicated information, an index of the to-be-indicated information, or the like. For another example, the to-be-indicated information may be indirectly indicated by indicating other information. There is an association relationship between the other information and the to-be-indicated information. For another example, only a part of the to-be-indicated information may be indicated, and the other part of the to-be-indicated information is already known or pre-agreed on. In addition, specific information may also be indicated by using a pre-agreed (for example, stipulated in a protocol) arrangement sequence of various pieces of information, to reduce indication overheads to some extent.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

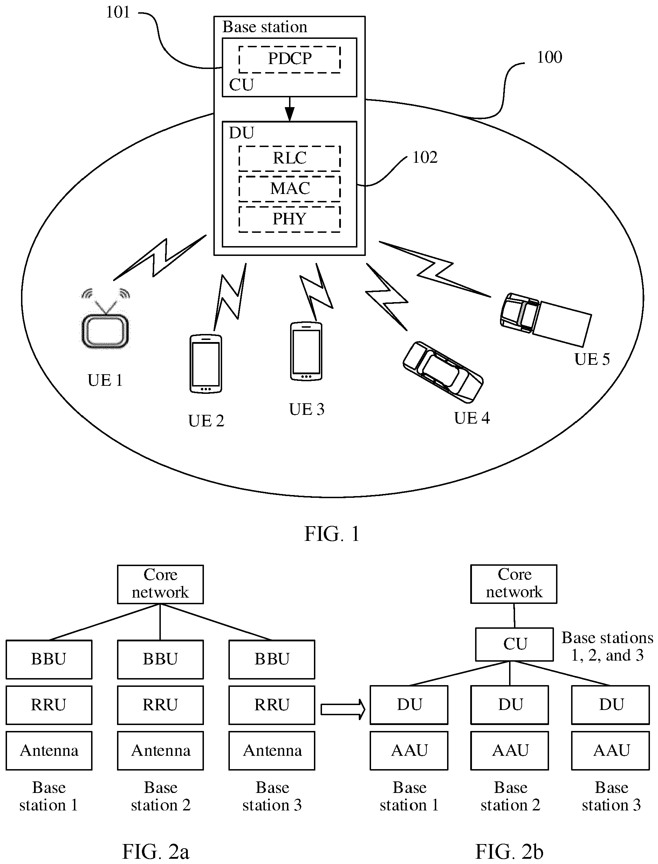

FIG. 1 shows a data transmission system 100 according to an embodiment of this application. The data transmission system includes a CU 101, a DU 102, and at least one terminal device. In this system architecture, a communication system is formed by a CU-DU split base station and a plurality of terminal devices. Optionally, one CU may be connected to a plurality of DUs (not shown in the figure). In the communication system, data of an MBS is sent from the CU to the DU, and then sent by the DU to the plurality of terminal devices.

Optionally, the CU and the DU in this embodiment of this application may directly communicate with each other, or may communicate with each other through forwarding by another device. This is not specifically limited in this embodiment of this application.

Optionally, the data transmission system 100 shown in FIG. 1 may be used in various communication systems, for example, a new radio (new radio, NR) communication system that uses a 5G communication technology, a future evolved system, or a system that integrates a plurality of communications. The technical solutions provided in this application may be applied to a plurality of application scenarios, for example, machine to machine (machine to machine, M2M), macro-micro communication, enhanced mobile broadband (enhanced mobile broadband, eMBB), ultra-reliable low-latency communication (ultra-reliable low-latency communication, uRLLC), massive machine type communication (massive machine type communication, mMTC), E-UTRA new radio dual connectivity (E-UTRA NR dual connectivity, EN-DC) networking, multicast broadcast single frequency network (multicast broadcast single frequency network, MBSFN), and single frequency network (single frequency network, SFN) scenarios.

Optionally, the terminal device in this embodiment of this application is a device having a wireless transceiver function. The terminal device may be deployed on land, including indoor, outdoor, handheld, or vehicle-mounted, or may be deployed on a water surface (for example, on a ship), or may be deployed in the air (for example, on an aircraft, a balloon, or a satellite). The terminal device may be user equipment (user equipment, UE). The UE includes a handheld device, a vehicle, a vehicle-mounted device, a wearable device, or a computing device that has a wireless communication function. For example, the UE may be a mobile phone (mobile phone), a tablet computer, or a computer having a wireless transceiver function. The terminal device may be a virtual reality (virtual reality, VR) terminal device, an augmented reality (augmented reality, AR) terminal device, a wireless terminal device in industrial control, a wireless terminal device in unmanned driving, a wireless terminal device in telemedicine, a wireless terminal device in a smart grid, a wireless terminal device in a smart city (smart city), a wireless terminal device in a smart home (smart home), or the like. In this embodiment of this application, an apparatus configured to implement a function of a terminal device may be a terminal device, or may be an apparatus, for example, a chip system, that can support the terminal device in implementing the function. In this embodiment of this application, the chip system may include a chip, or may include a chip and another discrete component. In this embodiment of this application, an example in which the apparatus configured to implement the function of the terminal device is a terminal device is used to describe the technical solution provided in this embodiment of this application.

For example, FIG. 2a is a schematic architectural diagram of a base station in a fourth generation mobile communication technology (the 4th Generation mobile communication technology, 4G) system. A 4G base station is referred to as an evolved base station (evolved NodeB, eNB). From a perspective of a physical module structure, the 4G base station may include a baseband unit (baseband unit, BBU), a radio remote unit (radio remote unit, RRU), and an antenna. Each 4G base station has a set of BBU, and is directly connected to a core network via the BBU.

FIG. 2b is a schematic architectural diagram of a base station in a fifth generation mobile communication technology (the 5th Generation mobile communication technology, 5G) system. A 5G base station is referred to as a gNodeB (gNB/ng-eNB), and may include a CU and a DU. In a 5G base station architecture, an RRU and an antenna in a 4G base station are combined into an active antenna unit (active antenna unit, AAU), and a BBU in the 4G base station is split into the CU and the DU. DU parts of different 5G base stations are deployed independently, and CU parts of different 5G base stations are deployed in a centralized manner. Each 5G base station has a DU. Different 5G base stations share a CU to access a core network for centralized management.

It may be understood that the 4G base station and the 5G base station are specific examples, both belong to a radio access network device, and are configured to complete a function of a radio access network or a radio access device. Therefore, the base station may also be replaced with a radio access network device.

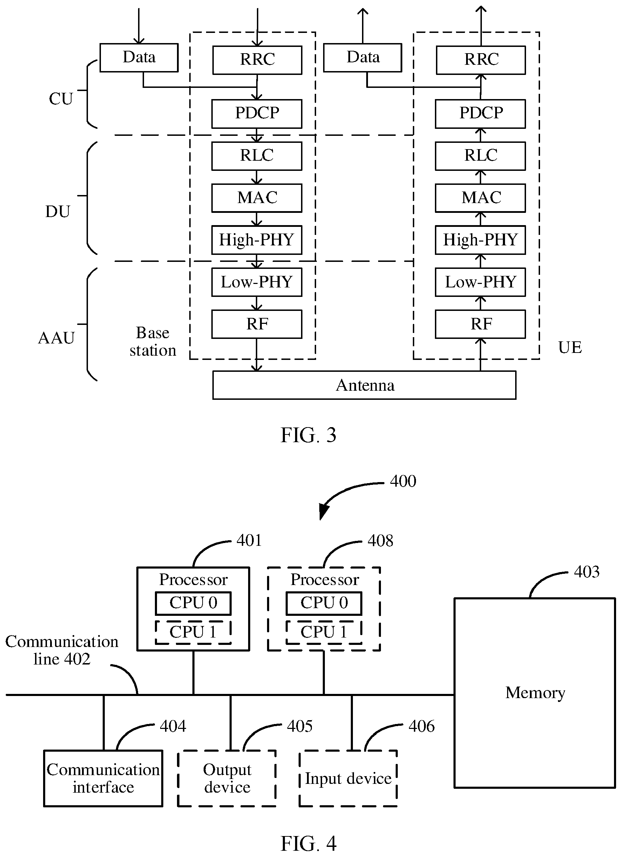

Optionally, the CU and the DU in embodiments of this application may be understood as division of the radio access network device from a perspective of logical functions. The CU and the DU may be physically split, or may be deployed together. This is not specifically limited in this embodiment of this application. The CU and the DU may be connected through an interface, where for example, the interface may be an F1 interface. The CU and the DU may be divided based on a protocol layer of a wireless network. For example, as shown in FIG. 3, functions of a radio resource control (radio Resource Control, RRC) layer, a service data adaptation (service data adaptation protocol, SDAP) layer, and a PDCP layer are set in the CU, and may be used to implement functions such as data encryption/decryption, integrity protection, and sorting. Functions of a radio link control (radio link control, RLC) layer, a media access control (media access control, MAC) layer, a physical layer (physical layer, PHY), and the like are set in the DU, and may be used to implement functions such as feedback, scheduling, data packet segmentation (segmentation), and concatenation (concatenation). It may be understood that division of the CU and the DU processing functions based on such protocol layers is merely an example, and may also be divided in another manner. This is not specifically limited in this embodiment of this application.

The CU and the DU are connected through an F1 interface. The CU represents the gNB and is connected to a core network through an NG interface, the CU represents the gNB and is connected to another gNB through an Xn interface, and the CU may further represent the gNB and is connected to another eNB through an X2 interface to perform a dual connectivity operation. It may be understood that the foregoing interfaces are all logical interfaces. In a 5G network and another future network, the foregoing interface may have another name. This is not limited in this embodiment of this application.

For example, with reference to FIG. 3, a procedure of transmitting data of an MB S based on a radio access network protocol stack is described. The data of the MBS first arrives at a PDCP layer of a CU. After being processed by the PDCP layer of the CU, the data of the MBS is delivered to an RLC layer of a DU. Then, the RLC layer of the DU delivers the data of the MBS to a MAC layer and a physical layer, and finally, the data of the MBS is transmitted to a terminal device through an antenna via an air interface. Correspondingly, each protocol layer of the terminal device performs corresponding processing on data packets in an order opposite to that on a base station side, to receive the data of the MBS.

It should be understood that the data of the MBS needs to be processed at each layer when being at each layer, and each layer has a corresponding functional entity to perform a corresponding function, for example, a PDCP entity at the PDCP layer or an RLC entity at the RLC layer.

Optionally, the CU or the DU in FIG. 1 in this embodiment of this application may be implemented by one device, or may be jointly implemented by a plurality of devices, or may be a functional module in a device. This is not specifically limited in this embodiment of this application. It may be understood that the foregoing function may be a network element in a hardware device, or may be a software function running on dedicated hardware, or may be a virtualization module instantiated on a platform (such as a cloud platform).

For example, the CU or the DU in FIG. 1 in this embodiment of this application may be implemented via the communication apparatus in FIG. 4. FIG. 4 is a schematic diagram of a hardware structure of a communication apparatus according to an embodiment of this application. The communication apparatus 400 includes a processor 401, a communication line 402, a memory 403, and at least one communication interface (In FIG. 4, that the communication apparatus 400 includes a communication interface 404 is only used as an example for description).

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for transmitting information between the foregoing components.

The communication interface 404 may be referred to as a transceiver or an apparatus that uses any transceiver, and is configured to communicate with another device or communication network, for example, an Ethernet, a radio access network (radio access network, RAN), or a wireless local area network (wireless local area network, WLAN).

The memory 403 may be a read-only memory (read-only memory, ROM) or another type of static storage device that can store static information and instructions, or a random access memory (random access memory, RAM) or another type of dynamic storage device that can store information and instructions. Alternatively, the memory 403 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory 403 is not limited thereto. The memory may exist independently, and is connected to the processor through the communication line 402. The memory may alternatively be integrated with the processor.

The memory 403 is configured to store computer instructions for performing the solutions in this application, and the processor 401 controls execution. The processor 401 is configured to execute the computer instructions stored in the memory 403, to implement a data transmission method provided in the following embodiment of this application.

Optionally, the computer instructions in this embodiment of this application may also be referred to as application program code. This is not specifically limited in this embodiment of this application.

During specific implementation, in an embodiment, the processor 401 may include one or more CPUs, for example, a CPU 0 and a CPU 1 in FIG. 4.

During specific implementation, in an embodiment, the communication apparatus 400 may include a plurality of processors, for example, the processor 401 and a processor 408 in FIG. 4. Each of the processors may be a single-core (single-CPU) processor, or may be a multi-core (multi-CPU) processor. The processor herein may be one or more devices, circuits, and/or processing cores configured to process data (for example, computer instructions).

During specific implementation, in an embodiment, the communication apparatus 400 may further include an output device 405 and an input device 406. The output device 405 communicates with the processor 401, and may display information in a plurality of manners.

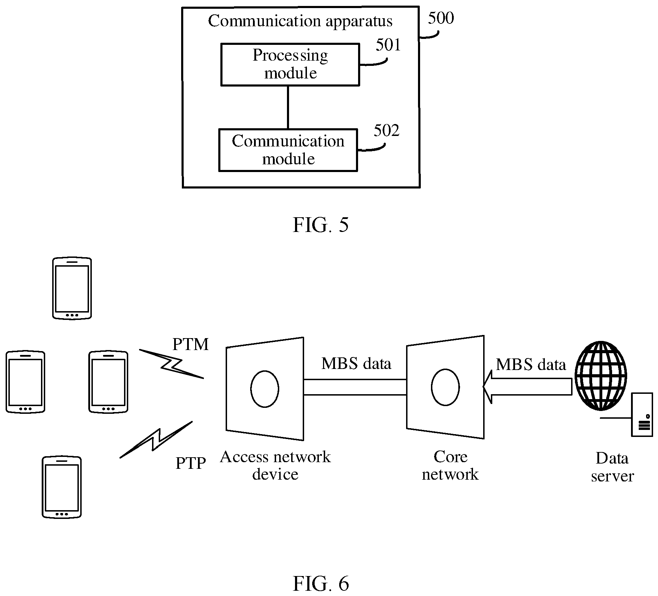

For example, the CU and/or the DU in FIG. 1 in this embodiment of this application may be alternatively implemented via a communication apparatus 500 in FIG. 5. The communication apparatus 500 includes a processing module 501 and a communication module 502.

In this embodiment, the communication apparatus 500 is presented by integrating functional modules obtained through division. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 500 may be in a form of the communication apparatus 400 shown in FIG. 4.

Specifically, functions/implementation processes of the communication module 502 and the processing module 501 in FIG. 5 may be implemented by the processor 401 in the communication apparatus 400 shown in FIG. 4 by invoking the computer instructions stored in the memory 403. Alternatively, a function/an implementation process of the processing module 501 in FIG. 5 may be implemented by the processor 401 in the communication apparatus 400 shown in FIG. 4 by invoking the computer instructions stored in the memory 403, and a function/an implementation process of the communication module 502 in FIG. 5 may be implemented by the communication interface 404 in the communication apparatus 400 shown in FIG. 4.

Because the communication apparatus 500 provided in this embodiment may execute the data transmission method described below, for technical effects that can be achieved by the communication apparatus 500, refer to the following method embodiments. Details are not described herein again.

It should be noted that one or more of the foregoing modules may be implemented by software, hardware, or a combination thereof. When any one of the foregoing modules is implemented by software, the software exists in a manner of computer program instructions, and is stored in a memory. A processor may be configured to execute the program instructions and implement the foregoing method procedure. The processor may be built into a SoC (system-on-a-chip) or an ASIC, or may be an independent semiconductor chip. In addition to cores used to execute software instructions to perform operations or processing, the processor may further include a necessary hardware accelerator, such as a field programmable gate array (field programmable gate array, FPGA), a PLD (programmable logic device), or a logic circuit implementing a dedicated logical operation.

When the foregoing module is implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the following method procedure.

It should be noted that in embodiments of this application, names of information between functions, network elements, or devices, names of parameters in the information, or the like are merely examples. In specific implementation, the names may be other names. This is not specifically limited in embodiments of this application.

In the following, unless otherwise specified, meanings expressed by a terminal device and user equipment are the same, and meanings expressed by an access network device and a base station are the same.

For ease of understanding of a person skilled in the art, the following describes some technical terms and related concepts.

### 1. MBS transmission

A multimedia broadcast multicast service (multimedia broadcast multicast service, MBMS) or a multicast broadcast service (multicast broadcast service, MBS) is a service oriented to a plurality of UEs, for example, a live broadcast service or scheduled program playing.

A multicast transmission technology is a technology in which an access network device simultaneously sends data of the MBS to the plurality of UEs. The data of the MBS may be sent by the network device to the UE in a unicast (unicast) manner by establishing a dedicated bearer for the UE, or may be sent to the UE in a multicast (multicast) manner by establishing a dedicated bearer for the MBS. When UEs of a large quantity need to receive data of an MBS, if the service is sent in a unicast manner, dedicated bearers need to be established for the UEs of the large quantity, and resources are consumed; if the service is sent to the UEs in a multicast manner, the dedicated bearer for the MBS may be established, and all UEs interested in the MBS may receive the MBS through the dedicated bearer for the MBS, thereby saving air interface resources, improving spectrum utilization, and improving a transmission rate.

For example, FIG. 6 shows a process of transmitting the data of the MBS. As shown in FIG. 6, the data of the MBS is from a data server. First, the server sends the data of the MBS to a core network, then the core network sends the data of the MBS to an access network device, and finally the access network device sends the data of the MBS to at least one UE.

For an access network device that supports the MBS, when the data of the MBS is sent from the access network device to the UE, there are two transmission modes. A first transmission mode is a point-to-multipoint (point-to-multipoint, PTM) transmission mode, and a second transmission mode is a point-to-point (point-to-point, PTP) transmission mode. The PTM transmission mode may also be referred to as a group scheduling manner or a multicast transmission mode.

### 2. PTM transmission mode

A PTM transmission mode is a transmission mode in which a network device simultaneously sends data of a service to a plurality of terminal devices. When PTM transmission is used, for same data, when the access network device (such as a base station) sends the data, the plurality of terminal devices simultaneously receive the data.

### 3. PTP transmission mode

A PTP transmission mode is a transmission mode in which an access network device sends data of a service to a terminal device. When PTP transmission is used, for same data, the access network device (such as a base station) establishes a separate transmission channel with each terminal device, and then separately sends the data to each terminal.

### 4. RLC entity transmission mode

In a radio protocol stack, transmission modes of RLC entities included in an RLC layer include the following three types.
(1) Transparent mode (transparent mode, TM): The RLC entity does not process data and only provides a pass through (pass through) function of the data. The RLC entity that uses the transmission mode is referred to as a TM RLC entity (TM entity for short).
(2) Unacknowledged mode (unacknowledged mode, UM): The RLC entity provides all RLC functions except retransmission and re-segmentation. Even if an error occurs during data packet transmission, the RLC entity in the transmission mode does not have a retransmission function and can provide only an unreliable transmission service. The RLC entity that uses the transmission mode is referred to as a UM RLC entity (UM entity for short). When a network device transmits data to a terminal device in a PTM mode, the RLC entity supports UM transmission, which is referred to as an RLC UM for short.
(3) Acknowledged mode (acknowledged mode, AM): The RLC entity provides all RLC functions, including an ARQ function. The RLC entity provides a reliable transmission service through error detection and retransmission. The RLC entity that uses the transmission mode is referred to as an AM RLC entity (AM entity for short). When a network device transmits data to a terminal device in a PTP mode, the RLC entity supports UM transmission or AM transmission, which is referred to as an RLC UM or an RLC AM for short.

### 5. Different frame formats of packet headers of data packets transmitted between a CU and a DU

Currently, when user plane data (such as a PDCP PDU) is transmitted between a CU and a DU, to facilitate the CU to perform data flow control on transmission of the user plane data packet, in other words, facilitate the CU to control a process of user plane data transmission, and prevent a data loss, three different frame formats of packet headers of data packets are specified in an existing protocol. The DU may feed back information, such as a packet loss, retransmission, and sending an acknowledgment, to the CU based on data packet header frames in different formats, so that the CU performs data flow control based on the feedback information. For example, the data packet header frames in different formats provide the following specific functions:
(1) provision of NR-user (user, U) specific sequence number (sequence number, SN) information for user data transmitted from a node carrying an NR PDCP to a corresponding node for a specific data radio bearer;
(2) information of successful in sequence delivery of NR PDCP PDUs to a UE from a corresponding node for user data associated with a specific data radio bearer;
(3) information of NR PDCP PDUs that are not delivered to a UE or not transmitted to lower layers;
(4) information of NR PDCP PDUs for user data associated with a specific data radio bearer;
(5) information of downlink NR PDCP PDUs to be discarded for user data associated with a specific data radio bearer;
(6) information of a currently desired buffer size at a corresponding node for transmitting to UE user data associated with a specific data radio bearer;
(7) information of a currently desired data rate (in a unit of bytes) at a corresponding node for transmitting to UE user data associated with a specific data radio bearer;
(8) information of a successful in sequence delivery mode of NR PDCP PDUs to a UE from a corresponding node for retransmission user data associated with a specific data radio bearer;
(9) information of NR PDCP PDUs transmitted to lower layers for retransmission user data associated with a specific data radio bearer;
(10) information of specific events at a corresponding node;
(11) information on radio link quality from a corresponding node for sending user data associated with a specific data radio bearer; and
(12) information on QoS for monitoring, from a corresponding node, user data associated with a specific data radio bearer.

For example, Table 1, Table 2, and Table 3 show specific different frame formats of packet headers of data packets.

**Table 1**

| Bits | | | | | | | | Number of Octets |
|---|---|---|---|---|---|---|---|---|
| 7 | 6 | 5 | 4 | 3 | 2 | 1 | 0 | |
| PDU Type (=0) | | | | Spare | DL Discard Blocks | DL Flush | Report polling | 1 |
| Spare | | | Reques t Out of Seq Report | Report Delivered | User data existen ce flag | Assistance Info. Report Polling Flag | Retransmissio n flag | 1 |
| NR-U Sequence Number | | | | | | | | 3 |
| DL discard NR PDCP PDU SN | | | | | | | | 0 or 3 |
| DL discard Number of blocks | | | | | | | | 0 or 1 |
| DL discard NR PDCP PDU SN start (first block) | | | | | | | | 0 or 3 |
| Discarded Block size (first block) | | | | | | | | 0 or 1 |
| ... | | | | | | | | |
| DL discard NR PDCP PDU SN start (last block) | | | | | | | | 0 or 3 |
| Discarded Block size (last block) | | | | | | | | 0 or 1 |
| DL report NR PDCP PDU SN | | | | | | | | 0 or 3 |
| Padding | | | | | | | | 0-3 |

(1) PDU Type: indicates a type of a PDU data packet, where 0 indicates that the data packet is downlink user data.
(2) Spare: indicates a reserved field.
(3) DL Discard Blocks: indicates a block packet loss flag. 0 indicates that the DL discard Number of blocks, DL discard NR PDCP PDU SN start (first block), and Discarded Block size (last block) fields do not exist, and 1 indicates that the DL discard Number of blocks, DL discard NR PDCP PDU SN start (first block), and Discarded Block size (last block) fields exist.
(4) DL Flush: 0 indicates that the DL discard NR PDCP PDU SN field does not exist, and 1 indicates that the DL discard NR PDCP PDU SN field exists.
(5) Report Polling: indicates a polling flag. 0 indicates that a peer end does not need to reply with a status report, and 1 indicates that the peer end needs to reply with the status report.
(6) Assistance Information Report Polling Flag: 0 indicates that the peer end does not need to reply with assistance information data, and 1 indicates that the peer end needs to reply with the assistance information data.
(7) Retransmission flag: is a retransmission flag, and indicates whether an NR-U packet is a retransmitted packet.
(8) NR-U Sequence Number: indicates an NR-U SN allocated by a PDCP.
(9) DL discard NR PDCP PDU SN: When DL Flush is 1, this field exists and indicates that the PDCP requires that all packets before the PDCP SN number be discarded.
(10) DL discard Number of blocks: When DL Discard Blocks is 1, this field exists and indicates a quantity of discarded blocks.
(11) DL discard NR PDCP PDU SN start: When DL Discard Blocks is 1, this field exists and indicates that the PDCP requires that packets, of a quantity of Discarded Block size, starting from the SN number (including the SN number) be discarded.
(12) Discarded Block size: When DL Discard Blocks is 1, this field exists and indicates a quantity of discarded packets.

**Table 2**

| Bits | | | | | | | | Number of Octets |
|---|---|---|---|---|---|---|---|---|
| 7 | 6 | 5 | 4 | 3 | 2 | 1 | 0 | |
| PDU Type (=1) | | | | Highest Transm itted NR PDCP SN Ind | Highest Delivered NR PDCP SNInd | Final Frame Ind. | Lost Packet Report | 1 |
| Spare | | | Delivere d NR PDCP SN Range | Data rate Ind. | Retransmi tted NR PDCP SN Ind | Delivered Retransmi tted NR PDCP SN Ind | Cause Report | 1 |

| | | | Ind | | | | | |
|---|---|---|---|---|---|---|---|---|
| Desired buffer size for the data radio bearer | | | | | | | | 4 |
| Desired Data Rate | | | | | | | | 0 or 4 |
| Number of lost NR-U Sequence Number ranges reported | | | | | | | | 0 or 1 |
| Start of lost NR-U Sequence Number range | | | | | | | | 0 or (6*Number of reported lost NR-U SN ranges) |
| End of lost NR-U Sequence Number range | | | | | | | | |
| Highest successfully delivered NR PDCP Sequence Number | | | | | | | | 0 or 3 |
| Highest transmitted NR PDCP Sequence Number | | | | | | | | 0 or 3 |
| Cause Value | | | | | | | | 0 or 1 |
| Successfully delivered retransmitted NR PDCP Sequence Number | | | | | | | | 0 or 3 |
| Retransmitted NR PDCP Sequence Number | | | | | | | | 0 or 3 |
| Number of successfully delivered out of sequence PDCP Sequence Number range | | | | | | | | 0 or 1 |
| Start of successfully delivered out of sequence PDCP Sequence Number range | | | | | | | | 0 or (6*Number of successfully delivered out of sequence PDCP Sequence Number range) |
| End of successfully delivered out of sequence PDCP Sequence Number range | | | | | | | | |
| Padding | | | | | | | | 0-3 |

(1) PDU type: 1 indicates that a data packet is a downlink data delivery status (DDDS).
(2) Desired buffer size for the concerned DRB: indicates a desired DU buffer (buffer) size for a concerned data radio bearer (data radio bearer, DRB). Desired Data Rate: indicates a desired data rate for the DRB, namely, a desired data rate of a UE associated with the DRB. The two pieces of information may be for assisting a CU in performing data flow control. After receiving the data frame DDDS shown in Table 2, the CU continues to transmit, based on the two pieces of information in the data frame and a highest SN of a currently existing PDCP PDU of a DU, a PDCP PDU with a desired bit to the DU until the CU receives the DDDS next time.
(3) Successfully delivered NR PDCP Sequence Number: indicates a highest SN of an NR PDCP PDU that is successfully sent by the CU to the UE. The information may be specifically indicated as information described in the following ① and ②.
   ① the highest NR PDCP PDU sequence number successfully delivered in sequence to the UE (AM): indicates a highest SN of an NR PDCP PDU that is successfully delivered by the DU to the UE in sequence, where AM indicates that the DU sends a PDCP PDU to the UE by using an RLC AM.
   ② Number/Start/End of successfully delivered out of sequence PDCP Sequence Number range (AM): indicates an SN quantity/a start SN/an end SN of NR PDCP PDUs that are successfully delivered by the DU to the UE out of sequence, where AM indicates that the DU sends a PDCP PDU to the UE by using an RLC AM.
(4) Transmitted NR PDCP Sequence Number: indicates an NR PDCP PDU successfully transmitted by the UE. The information may be specifically indicated as information described in the following ③.

③ the highest NR PDCP PDU sequence number transmitted to low layers (UM): indicates a highest SN number of an NR PDCP PDU that is successfully sent by the DU to lower layers, where the lower layers refer to a MAC layer and a physical layer. UM indicates that the DU sends a PDCP PDU to the UE by using an RLC UM.

The information in ①, ②, and ③ may also be used to assist the CU in performing data flow control.

(5) Number/Start/End of "lost" NR-U packet: indicates a quantity/a start SN/an end SN of lost NR-U data packets. The information is introduced to avoid out-of-synchronization of NR PDCP hyper frame numbers (hyper frame numbers, HFNs) between UEs.

(6) Successfully delivered retransmitted NR PDCP Sequence Number: indicates an SN of an NR PDCP that is successfully retransmitted by the DU to the UE. Retransmitted NR PDCP Sequence Number: indicates an SN of an NR PDCP PDU retransmitted by the DU to the lower layers. Based on the two messages, the CU may determine specific PDCP PDUs retransmitted by the DU to the UE or to the lower layers.

**Table 3**

| Bits | | | | | | | | Number of Octets |
|---|---|---|---|---|---|---|---|---|
| 7 | 6 | 5 | 4 | 3 | 2 | 1 | 0 | |
| PDU Type (=2) | | | | PDCP Dupl. Ind. | Assistance Info. Ind. | UL Delay Ind. | DL Delay Ind. | 1 |
| Spare | | | | | | | PDCP Duplication Activation Suggestion | 1 |
| Number of Assistance Information Fields | | | | | | | | 0 or 1 |
| Assistance Information Type | | | | | | | | 0 or (2*Number of Assistance Info Fields+sum of Number of octets for Radio Quality Assistance Information Fields) |
| Number of octets for Radio Quality Assistance Information Fields | | | | | | | | |
| Radio Quality Assistance Information | | | | | | | | |
| UL Delay DU Result | | | | | | | | 0 or 4 |
| DL Delay DU Result | | | | | | | | 0 or 4 |

PDU type: 2 indicates that a data packet is assistance information data.

The information may be used to support a CU in adjusting a procedure for transmitting a PDCP PDU to a DU. For example, in the following cases, the CU may adjust, based on the assistance information, the procedure for transmitting the PDCP PDU to the DU.
(1) A corresponding node (such as the DU) sends radio link quality assistance information of a concerned DRB and/or a suggestion for activating PDCP duplication to a node (such as the CU) that carries an NR PDCP entity.
(2) The corresponding node sends radio link quality assistance information of an associated RLC entity to the node that carries the NR PDCP entity.

The quality assistance information in (1) and (2) may further include uplink (uplink, UL) delay information and/or downlink (downlink, DL) delay information measured by the corresponding node (such as the DU).

The foregoing describes technical terms and related concepts in embodiments of this application. Details are not described below again.

In this embodiment of this application, an F1 scenario is a scenario in which a CU of a base station communicates with a DU of the base station, and an X2 scenario is a scenario in which a CU of a base station communicates with a DU of another base station. In the foregoing scenarios, to ensure data transmission reliability, when receiving an NR-U data packet sent by the DU, an RLC entity of the DU manages, through a receive window, an SN number of the NR-U, namely, an SN number of a PDCP PDU. For example, the RLC entity of the DU may maintain bits (bits) of a maximum of 1024 out-of-order SNs through the receive window.

In addition, the DU further reports a DDDS to the CU, so that the CU performs data flow control on the data packet sent to the DU. Currently, the DU may report the DDDS to the CU in the following three manners.

Manner 1: When the DU sends a new radio-user (new radio-user, NR-U) data packet (namely, a PDCP PDU) to the terminal device by using an RLC UM, after the DU receives information indicating that packet assembly at a MAC layer succeeds, the DU sends an NR-U status report, in other words, sends the DDDS to a PDCP entity of the CU. In addition, the DU further starts a periodicity timer, and periodically sends the DDDS to the CU.

Manner 2: When the DU sends an NR-U packet to the terminal device by using an RLC AM mode, after receiving a feedback report of the terminal device, the RLC entity of the DU sends the DDDS to a PDCP entity of the CU. In addition, the DU further starts a periodicity timer, and periodically sends the DDDS to the CU.

Manner 3: When receiving a polling packet sent by the CU, the DU immediately sends the DDDS to the CU.

Currently, when data of an MBS is transmitted in a CU-DU architecture, the CU reports the DDDS to the DU in two manners.

Manner A: A GTP-U tunnel shared by a plurality of terminal devices and a GTP-U tunnel dedicated to a single terminal device are established between the CU and the DU. Currently, at least when the DU transmits data to the plurality of terminal devices in a PTM mode, the CU sends an MBS data packet to the DU through the shared GTP-U tunnel, where the data packet includes an MBS data PDCP PDU and packet header downlink user data (DL USER DATA) (namely, PDU Type 0 shown in Table 1). The DU feeds back a DDDS (namely, PDU Type 1 shown in Table 2) of each terminal device to the CU through the dedicated GTP-U tunnel.

Manner B: A GTP-U tunnel shared by a plurality of terminal devices and a GTP-U tunnel dedicated to a single terminal device are established between the CU and the DU. Currently, at least when the DU transmits data to the plurality of terminal devices in a PTM mode, the CU sends an MBS data packet to the DU through the shared GTP-U tunnel, where the data packet includes an MBS data PDCP PDU and packet header DL USER DATA. The DU feeds back a DDDS of each terminal device to the CU through the shared GTP-U tunnel. In this manner, a DDDS report fed back by the DU to the CU carries an index of the terminal device, so that the CU determines the terminal device to which the DDDS belongs, and subsequently retransmits the PDCP PDU for the terminal device.

The DDDS is reported for a single DRB in both Manner A and Manner B. For different terminal devices, the CU allocates different DRBs. That is, the DDDS is reported for a single terminal device in both Manner A and Manner B. When the DU sends the PDCP PDU to the terminal device by using the RLC UM, after sending the PDCP PDU sent to the terminal device to the lower layers, the DU generates a DDDS, where the DDDS indicates a space of a buffer (buffer) of the DU and/or a status of a PDCP PDU lost on an F1 interface. When the DU sends the PDCP PDU to the terminal device by using the RLC AM, the DU sends the PDCP PDU to the terminal device and generates a DDDS after receiving a feedback from the terminal device, where the DDDS indicates a receiving status of the PDCP PDU of the terminal device. Then, the DU sends the DDDS to the CU, to notify the CU of a sending status of the PDCP PDU and the space of the buffer of the DU, so that the CU subsequently sends data to the buffer of the DU.

However, for an MBS, data of the MBS sent to a plurality of terminal devices is the same. The CU sends a PDCP PDU to the DU through the F1 interface, and the DU stores the received PDCP PDU in the buffer (buffer), and then sends the PDCP PDU to the plurality of terminal devices in the PTM and/or PTP mode. In this case, data packets received by the plurality of terminal devices are the same data packet stored in the DU. When the RLC UM is used, the DDDS generated by the DU is irrelevant to the terminal device. Consequently, when the DU sends the DDDS to the CU in Manner A or Manner B, repeated signaling overheads are caused, and a resource waste is caused. When the RLC AM is used, the DU separately reports the DDDS of each terminal device in Manner A or Manner B, and this also causes large signaling overheads and causes a resource waste.

To resolve the foregoing technical problem, embodiments of this application provide a data transmission method. The following describes the data transmission method provided in embodiments of this application with reference to the accompanying drawings.

In this application, a DU receives at least one PDCP PDU from a CU, and the at least one PDCP PDU carries data of an MBS. The DU sends the at least one PDCP PDU to at least two terminal devices. Then, the DU sends a status report to the CU. The status report is obtained by the DU by combining results of sending the PDCP PDU to a plurality of (at least two) terminal devices. A mode in which the DU sends the at least one PDCP PDU to the at least two terminal devices may include any one or more of the following: RLC UM, RLC AM, PTM, PTP, and the like.

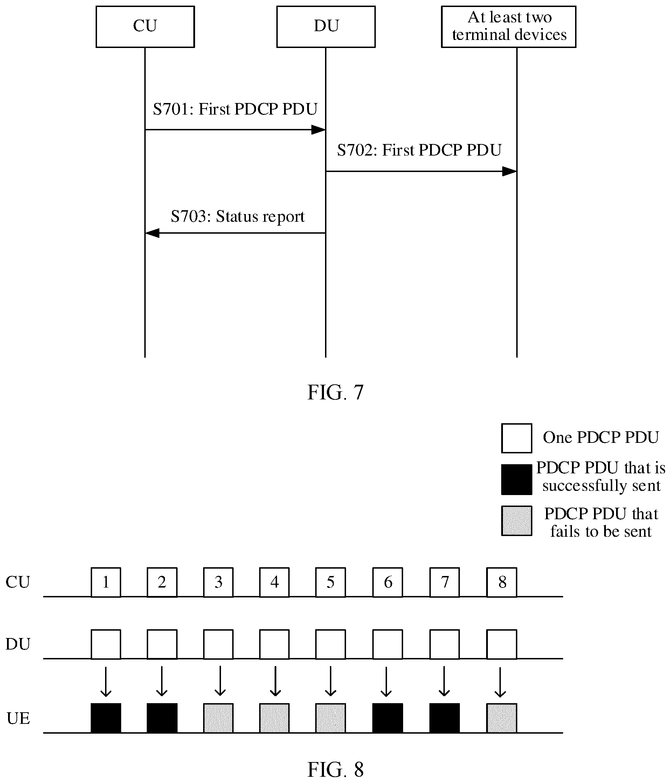

FIG. 7 shows a data transmission method according to an embodiment of this application. The method includes the following steps.

S701: A CU sends a first PDCP PDU to a DU. Correspondingly, the DU receives the first PDCP PDU sent by the CU.

In step S701, an action performed by the CU may be performed by the communication interface 404 of the communication apparatus 400 and the communication module 502 of the communication apparatus 500. Alternatively, an action performed by the DU may be performed by the communication interface 404 of the communication apparatus 400 and the communication module 502 of the communication apparatus 500.

The first PDCP PDU carries data of an MBS. The first PDCP PDU may be one or more PDCP PDUs. This is not limited in this application.

The CU may send the first PDCP PDU to the DU through an F1 channel. Correspondingly, the DU may receive, through the F1 channel, the first PDCP PDU sent by the CU. The F1 channel includes a GTP-U tunnel shared by a plurality of terminal devices and a GTP-U tunnel dedicated to a single terminal device. A tunnel used by the CU to send the first PDCP PDU to the DU is not specifically limited in this application.

S702: The DU sends the first PDCP PDU to at least two terminal devices.

In step S702, an action performed by the DU may be performed by the communication interface 404 of the communication apparatus 400 and the communication module 502 of the communication apparatus 500.

After receiving the first PDCP PDU, the DU stores the first PDCP PDU in a buffer (buffer) of the DU, and sends a processed first PDCP PDU to the at least two terminal devices.

Optionally, the DU may send the first PDCP PDU to the at least two terminal devices in the following designs.

Design 1: The DU sends the first PDCP PDU to the at least two terminal devices by using an RLC UM. It should be noted that when the DU transmits data to the terminal device in a PTM mode, only the RLC UM is supported in the mode. When the DU transmits data to the terminal device in a PTP mode, an RLC AM and the RLC UM may be supported in the mode. Therefore, in this design, that the DU sends the first PDCP PDU to the at least two terminal devices by using an RLC UM includes cases in which the DU sends the first PDCP PDU to the at least two terminal devices in the PTM mode and in the PTP mode that supports the RLC UM.

Design 2: The DU sends the first PDCP PDU to the at least two terminal devices in a PTM mode.

Design 3: The DU sends the first PDCP PDU to a first terminal device in the at least two terminal devices by using an RLC AM, where the first terminal device includes at least one terminal device; and the DU sends the first PDCP PDU to a second terminal device in the at least two terminal devices by using an RLC UM, where the second terminal device includes at least one terminal device.

Design 4: The DU sends the first PDCP PDU to a first terminal device in the at least two terminal devices in a PTM mode, where the first terminal device includes at least one terminal device; and the DU sends the first PDCP PDU to a second terminal device in the at least two terminal devices in a PTP mode, where the second terminal device includes at least one terminal device.

Optionally, a mode in which the DU sends the first PDCP PDU to the at least two terminal devices may be independently determined by the CU, or may be independently determined by the DU, or may be jointly determined by the DU and the CU.

S703: The DU sends a status report to the CU. Correspondingly, the CU receives the status report sent by the DU.

In step S703, an action performed by the CU may be performed by the communication interface 404 of the communication apparatus 400 and the communication module 502 of the communication apparatus 500. Alternatively, an action performed by the DU may be performed by the communication interface 404 of the communication apparatus 400 and the communication module 502 of the communication apparatus 500.

The status report indicates results of sending the first PDCP PDU to the at least two terminal devices. In other words, the status report is obtained by the DU by "combining" the results of sending the first PDCP PDU to the at least two terminal devices. The status report may also be referred to as a DDDS. This is not limited in this application.

For ease of description, the "result of sending the first PDCP PDU" is referred to as a "sending result" for short. It should be noted that "combining" means that the status report is a "sending result" determined by the DU based on a "sending result" of each of the at least two terminal devices, to indicate the sending results of the at least two terminal devices. "Combining" does not mean simply listing the "sending result" of each of the at least two terminal devices in one status report, to indicate the sending results of the at least two terminal devices.

For example, the first PDCP PDU is three PDCP PDUs, and SN 1 to SN 3 identify the three PDCP PDUs. For example, the at least two terminal devices are three terminal devices, and the three terminal devices are identified by UE 1 to UE 5.

The frame structure described in Table 2 above is used as an example. It is assumed that the DU sends SN 1 to SN 3 to UE 1 to UE 3 in the PTM mode. It is assumed that SN 1 and SN 2 are successfully sent to the three terminal devices, and SN 3 is not successfully sent to UE 2. In this case, the "combined" status report carries "Highest transmitted NR PDCP Sequence Number" that is filled with "SN#2". It should be noted that "SN#2" means that an SN number is 2. This is uniformly described herein, and details are not described below again. In this way, results of sending SN 1 to SN 3 to the three terminal devices are indicated.

The foregoing case occurs instead of the following case: The "combined" status report carries "Highest transmitted NR PDCP Sequence Number" that is filled with "SN#3" to indicate a result of sending SN 1 to SN 3 to UE 1, "Highest transmitted NR PDCP Sequence Number" that is filled with "SN#3" to indicate a result of sending SN 1 to SN 3 to UE 2, and "Highest transmitted NR PDCP Sequence Number" that is filled with "SN#2" to indicate a result of sending SN 1 to SN 3 to UE 3.

Based on the foregoing technical solution, when the DU receives the first PDCP PDU from the CU, and the first PDCP PDU carries the data of the MBS, the DU sends the first PDCP PDU to the at least two terminal devices, and sends the status report to the CU, where the status report indicates the results of sending the first PDCP PDU to the at least two terminal devices. Therefore, when the data of the MBS is transmitted, signaling overheads for status report reporting are reduced, and resources are saved.

Optionally, the DU may send the status report to the CU through a first channel. Correspondingly, the CU receives, through the first channel, the status report sent by the DU. The first channel is the GTP-U tunnel shared by the plurality of terminal devices.

Optionally, the DU may send the status report to the CU through a second channel. Correspondingly, the CU receives, through the second channel, the status report sent by the DU. The second channel is the GTP-U tunnel dedicated to the single terminal device.

The status report indicates the result of sending the first PDCP PDU to each of the at least two terminal devices. For example, there are three terminal devices. The DU sends the first PDCP PDU to the three terminal devices, and the status report indicates results of sending the first PDCP PDU to the three terminal devices.

Optionally, the status report may be status reports for a plurality of terminal devices with relatively low priorities, that is, the at least two terminal devices are terminal devices with relatively low priorities. For a terminal device with a relatively high priority or a terminal device whose sending result is marked as "cannot be combined with a sending result of another terminal device", the foregoing manner of "reporting a DDDS for a single terminal device" may be used. This is not limited in this application.

The following specifically describes the status report based on a design of step S702 and the frame format shown in Table 2.

When Design 1 above is used, the status report is an "RLC UM" status report. The RLC UM is a mode used when the DU sends the first PDCP PDU to the terminal device, and for ease of description, this form is used for representation. This is uniformly described herein, and details are not described below again. The status report indicates a result of sending the first PDCP PDU by the DU to each of the at least two terminal devices by using the RLC UM.

For example, the at least two terminal devices are five terminal devices. UE 1 to UE 5 identify the five terminal devices, the first PDCP PDU is five PDCP PDUs, and SN 1 to SN 5 identify the five PDCP PDUs.

In this case, the DU sends SN 1, SN 2, SN 3, SN 4, and SN 5 to UE 1, UE 2, UE 3, UE 4, and UE 5 by using the RLC UM. It is assumed that SN 1 and SN 2 are successfully sent to the five UEs, and SN 3 is successfully sent to only UE 3 and UE 5, but fails to be sent to the remaining three terminal devices. In this case, the frame format of the status report may include the "Highest transmitted NR PDCP Sequence Number" field that is filled with "SN#2". In other words, the status report indicates results of sending the first PDCP PDU by the DU to the five terminal devices by using the RLC UM.

When Design 2 above is used, the status report is a "PTM" status report, and indicates a result of sending the first PDCP PDU by the DU to each of the at least two terminal devices in the PTM mode.

The foregoing example is still used for description. In this case, the frame format of the status report may include the "Highest transmitted NR PDCP Sequence Number" field that is filled with "SN#2". In other words, the status report indicates results of sending the first PDCP PDU by the DU to the five terminal devices in the PTM mode.

When Design 3 above is used, the status report is an "RLC AM and RLC UM" status report, and indicates the result of sending the first PDCP PDU to the first terminal device and the result of sending the first PDCP PDU to the second terminal device.

An example in which the at least two terminal devices are five terminal devices is still used. UE 1 to UE 5 identify the five terminal devices, the first PDCP PDU is five PDCP PDUs, and SN 1 to SN 5 identify the five PDCP PDUs. For example, the first terminal device is UE 1, UE 3, and UE 4, and the second terminal device is UE 2 and UE 5.

For example, in this case, the DU sends SN 1, SN 2, SN 3, SN 4, and SN 5 to UE 1, UE 3, and UE 4 by using the RLC AM, and sends SN 1, SN 2, SN 3, SN 4, and SN 5 to UE 2 and UE 5 by using the RLC UM. It is assumed that when the DU uses the RLC AM, SN 1, SN 2, and SN 3 are successfully sent to UE 1, UE 3, and UE 4, SN 4 is successfully sent to only UE 3, and SN 5 is successfully sent to only UE 4. When the DU uses the RLC UM, SN 1 and SN 2 are successfully sent to UE 2 and UE 5, but SN 3 and SN 5 are successfully sent only to UE 2, and SN 4 is successfully sent only to UE 5. Therefore, in this case, the status report may include the "Highest successfully delivered NR PDCP Sequence Number Highest" field that is filled with "SN#2", and include "Highest transmitted NRPDCP Sequence Number" that is filled with "SN#4".

For example, in this case, the DU sends SN 1 to SN 5 to UE 1, UE 3, and UE 4 by using the RCL AM, and sends SN 1 to SN 5 to UE 2 and UE 5 by using the RLC UM. It is assumed that SN 1, SN 2, SN 3, and SN4 are successfully sent to UE 1 to UE 5, and SN 3 is successfully sent to UE 3 and UE 4 but fails to be sent to UE 1, UE 2, and UE 5. Therefore, in this case, a new field, for example, "Highest successfully sent NR PDCP Sequence Number Highest", may be defined in the frame format described in the foregoing Table 3, and the field is filled with "SN#4", to indicate that a highest SN that is in the current first PDCP PDU and that is successfully sent to the at least two terminal devices is 4. Alternatively, an existing field in the frame format shown in Table 2 may be reused, for example, "Highest successfully delivered NR PDCP Sequence Number Highest" or "Highest transmitted NR PDCP Sequence Number", and the field is filled with "SN#4", to indicate that a highest SN that is in the current first PDCP PDU and that is successfully sent to the at least two terminal devices is 4.

It should be noted that a frame format of the status report, a field included in the frame format, and a corresponding filling manner are not specifically limited in this application. This is uniformly described herein, and details are not described below again.

When Design 4 above is used, specifically, there are cases of Design 5 and Design 6 described below.

Design 5: The status report is a "PTP and PTM" status report, and indicates a result of sending the first PDCP PDU to the first terminal device and a result of sending the first PDCP PDU to the second terminal device.

Optionally, in this design, the status report may carry indication information, to indicate that the status report is the "PTP and PTM" status report.

For example, the indication information may be implemented by reusing a current index (indication) (which may also be referred to as an indication) in the frame format shown in Table 2, for example, "Highest Delivered NR PDCP SN Ind" and "Highest Transmitted NR PDCP SN Ind", or may be implemented by newly defining an index of "PTP and PTM". A specific implementation of the indication information is not specifically limited in this application.

An example in which the at least two terminal devices are five terminal devices is still used. UE 1 to UE 5 identify the five terminal devices, the first PDCP PDU is five PDCP PDUs, and SN 1 to SN 5 identify the five PDCP PDUs. For example, the first terminal device is UE 1, UE 3, and UE 4, and the second terminal device is UE 2 and UE 5. In this case, the DU sends SN 1, SN 2, SN 3, SN 4, and SN 5 to UE 1, UE 3, and UE 4 in a PTP mode; and sends SN 1, SN 2, SN 3, SN 4, and SN 5 to UE 2 and UE 5 in a PTM mode.

It is assumed that when the DU uses PTP, SN 1, SN 2, and SN 3 are successfully sent to UE 1, UE 3, and UE 4, SN 4 is successfully sent to only UE 3, and SN 5 is successfully sent to only UE 4. When the DU uses PTM, SN 1 and SN 2 are successfully sent to UE 2 and UE 5, but SN 3 and SN 5 are successfully sent only to UE 2, and SN 4 is successfully sent only to UE 5. Therefore, in this case, the status report may include the "Highest successfully delivered NR PDCP Sequence" field that is filled with "SN#2", and include "Highest transmitted NR PDCP Sequence Number" that is filled with "SN#4". It should be noted that, in this manner, it needs to be agreed on in advance that "Highest successfully delivered NR PDCP Sequence" represents a field filled in when the DU sends the first PDCP PDU to the terminal device in the PTP mode, and "Highest transmitted NR PDCP Sequence Number" represents a field filled in when the DU sends the first PDCP PDU to the terminal device in the PTM mode. Alternatively, the status report may include the "Highest successfully delivered NR PDCP Sequence" field that is filled with "SN#4", and include "Highest transmitted NR PDCP Sequence Number" that is filled with "SN#2". It should be noted that, in this manner, it also needs to be agreed on in advance that "Highest successfully delivered NR PDCP Sequence" represents a field filled in when the DU sends the first PDCP PDU to the terminal device in the PTM mode, and "Highest transmitted NR PDCP Sequence Number" represents a field filled in when the DU sends the first PDCP PDU to the terminal device in the PTP mode.

It should be noted that, correspondingly, a specific field that is specifically agreed on to be a field filled in when the DU sends the first PDCP PDU to the terminal device in the PTP mode, and a specific field that is specifically agreed on to be a field filled in when the DU sends the first PDCP PDU to the terminal device in the PTM mode are not specifically limited in this application.

Alternatively, whether the field is a field filled in when the DU sends the first PDCP PDU to the terminal device in the PTP mode, or a field filled in when the DU sends the first PDCP PDU to the terminal device in the PTM mode may be indicated in a separate indication manner. For example, a bit may be used for indication, where "0" represents the PTM mode, and " 1" represents the PTP mode. Optionally, a specific field to which an additional indication is added and an indication manner are not limited in this application.

Alternatively, a new field may be defined in the frame format shown in Table 2, for example, "Highest successfully sent NR PDCP Sequence for PTP", to indicate the DU to send the first PDCP PDU to the first terminal device in the PTP mode, and/or "Highest successfully sent NR PDCP Sequence for PTM", to indicate the DU to send the first PDCP PDU to the second terminal device in the PTM mode.

For example, in this case, the DU sends SN 1 to SN 5 to UE 1, UE 3, and UE 4 by using PTP, and sends SN 1 to SN 5 to UE 2 and UE 5 by using PTM. It is assumed that SN 1, SN 2, SN 3, and SN4 are successfully sent to UE 1 to UE 5, and SN 3 is successfully sent to UE 3 and UE 4 but fails to be sent to UE 1, UE 2, and UE 5. Therefore, in this case, a new field, for example, "Highest successfully sent NR PDCP Sequence Number Highest", may be defined in the frame format described in the foregoing Table 3, and the field is filled with "SN#4", to indicate that a highest SN that is in the current first PDCP PDU and that is successfully sent to the at least two terminal devices is 4. Alternatively, an existing field in the frame format shown in Table 2 may be reused, for example, "Highest successfully delivered NR PDCP Sequence Number Highest" or "Highest transmitted NR PDCP Sequence Number", and the field is filled with "SN#4", to indicate that a highest SN that is in the current first PDCP PDU and that is successfully sent to the at least two terminal devices is 4.

Design 6: The status report is a "PTM" status report, and indicates only a result of sending the first PDCP PDU to the first terminal device. To be specific, in this design, the DU combines only sending results of the first terminal device that sends the first PDCP PDU in a PTM mode, and does not combine sending results of the second terminal device that sends the first PDCP PDU in a PTP mode. It may be understood that "only used" in embodiments of this application is a relative concept for the first terminal device and the second terminal device. For example, "only used" for the first terminal device means not used for the second terminal device. The foregoing descriptions do not exclude that the status report includes other information.

For example, in this design, the frame format of the status report may be the same as the frame format of the status report in Design 2 above. Details are not described herein again.

It should be noted that the frame format of the status report and a manner and/or content of filling in a related field in the frame format are merely examples for description, and constitute no specific limitation on the status report. The status report may alternatively indicate corresponding information based on a separate field. This is not limited in this application, and is uniformly described herein. Details are not described below.

Optionally, for the result of sending the first PDCP PDU by the DU to the second terminal device by using PTP, one status report may indicate the result of sending the first PDCP PDU to the second terminal device; or a result of sending the first PDCP PDU to each terminal device that is in the second terminal device may be separately indicated by a status report, in other words, in the foregoing manner of "reporting a DDDS for a single terminal device". In this design, the status report of the second terminal device is not specifically limited in this application.

Optionally, when the DU indicates, in the foregoing manner of "reporting a DDDS for a single terminal device", the result of sending the first PDCP PDU to the second terminal device, if the DU sends the status report to the CU through the shared GTP-U, the status report may carry an index number (index) of the terminal device, so that the CU identifies a terminal device to which the status report belongs and that is in the second terminal device. For example, the index number may be represented by using a terminal device identity (UE identity, UE ID). Alternatively, the index number may be represented in the following manner: When the status report is sent for the first time, a UE ID and an indication sequence number may be carried, to notify the CU that the UE ID corresponds to the indication sequence number. When the status report is sent again, only the indication sequence number is carried. In this way, the CU may directly determine, based on the indication sequence number, a terminal device to which the status report belongs, thereby reducing signaling overheads. Alternatively, the index number may be represented in a manner of agreeing on an indication sequence number in advance. For example, the CU, the DU, and the UE share one indication sequence number to represent the UE ID. A specific representation manner of the UE index is not limited in this application.

When Design 3 above and/or Design 5 above are/is used, step S703 may be further specifically implemented as the following steps.

Step S703a: The DU sends a first status report to the CU. Correspondingly, the CU receives the first status report sent by the DU.

In step S703a, an action performed by the CU may be performed by the communication interface 404 of the communication apparatus 400 and the communication module 502 of the communication apparatus 500. Alternatively, an action performed by the DU may be performed by the communication interface 404 of the communication apparatus 400 and the communication module 502 of the communication apparatus 500.

The first status report indicates the result of sending the first PDCP PDU to the first terminal device.

Step S703b: The DU sends a second status report to the CU. Correspondingly, the CU receives the second status report sent by the DU.

In step S703b, an action performed by the CU may be performed by the communication interface 404 of the communication apparatus 400 and the communication module 502 of the communication apparatus 500. Alternatively, an action performed by the DU may be performed by the communication interface 404 of the communication apparatus 400 and the communication module 502 of the communication apparatus 500.

The second status report indicates the result of sending the first PDCP PDU to the second terminal device.

To be specific, the status report may be specifically implemented as the first status report and the second status report, and the DU may separately send the first status report and the second status report to the CU. It should be noted that a sequence of step S703a and step S703b may be exchanged. A sequence of sending the first status report and the second status report by the DU to the CU is not specifically limited in this application.

Optionally, based on Design 3 above, step S703a may further be specifically implemented as the following steps.

S703c: The DU sends a sixth status report to the CU. Correspondingly, the CU receives the sixth status report sent by the DU.

In step S703c, an action performed by the CU may be performed by the communication interface 404 of the communication apparatus 400 and the communication module 502 of the communication apparatus 500. Alternatively, an action performed by the DU may be performed by the communication interface 404 of the communication apparatus 400 and the communication module 502 of the communication apparatus 500.

The sixth status report indicates a result of delivering, in sequence, the first PDCP PDU to the at least one terminal device that is in the first terminal device.

S703d: The DU sends a seventh status report to the CU. Correspondingly, the CU receives the seventh status report sent by the DU.

In step S703d, an action performed by the CU may be performed by the communication interface 404 of the communication apparatus 400 and the communication module 502 of the communication apparatus 500. Alternatively, an action performed by the DU may be performed by the communication interface 404 of the communication apparatus 400 and the communication module 502 of the communication apparatus 500.

The seventh status report indicates a result of delivering, out of sequence, the first PDCP PDU to the at least one terminal device that is in the first terminal device.

It should be noted that an execution sequence of step S703c and step S703d may be exchanged, and an execution sequence of step S703c and step S703d is not specifically limited in this application.

Optionally, a related indication and information that are irrelevant to a sending result of sending a PDCP PDU to a terminal device may also be included in the status report, for example, "Final Frame Ind", "Cause Report", and "CauseValue" shown in Table 2. Alternatively, a related indication and information that are irrelevant to a sending result of sending a PDCP PDU to a terminal device may not be included in the status report, and the DU separately reports the indication and the information to the CU. In this case, the foregoing separate reporting manner may be used, or a manner similar to a combination manner in this application may be used. In addition, for the assistance information shown in Table 3, the foregoing separate reporting manner may also be used, or a manner similar to a combination manner in this application may be used. A manner of reporting the part information is not specifically limited in this application.

It should be noted that, after receiving the status report, the CU needs to determine whether the status report is a combination of status reports of all terminal devices, so as to perform subsequent work, for example, determine whether to wait for a subsequent status report.

Therefore, optionally, the first status report and the second status report may further include the following designs.

With reference to Design 4 above, the first status report and the second status report may include the following Design A.

Design A: The first status report carries first indication information, and the first indication information indicates that the first status report corresponds to the PTM mode. It should be noted that "the first status report corresponds to the PTM mode" means that the first status report is a "PTM" status report, to be specific, the first status report is a combination of status reports of terminal devices to which the DU sends the first PDCP PDU in the PTM mode.

In a possible implementation, the first indication information may reuse the index, for example, "Highest Transmitted NR PDCP SN Ind" or another index, in Table 2 to indicate that the first status report is a "PTM" status report. This is not limited in this application.

In another possible implementation, because the PTM supports only the RLC UM, the first indication information may use the "Highest transmitted NR PDCP Sequence Number" field in the frame structure shown in Table 2, to implicitly indicate that the first status report is a "PTM" status report.

In still another possible implementation, the first indication information may explicitly indicate, in a manner of adding an additional field "PTM", that the first status report is a "PTM" status report. For example, an index or a field is newly defined.

In yet another possible implementation, the first indication information may alternatively be implemented by using another field in the frame structure shown in Table 2 and in a manner of adding a field to the another field, to indicate that the first status report is a "PTM" status report.

The second status report carries second indication information, and the second indication information indicates that the second status report corresponds to a PTP mode. It should be noted that "the second status report corresponds to a PTP mode" means that the second status report is a first "PTP" status report, to be specific, the second status report is a combination of status reports of terminal devices to which the DU sends the first PDCP PDU in the PTP mode.

In a possible implementation, the first indication information may explicitly indicate, in a manner of adding an additional field "PTP", that the second status report is a "PTP" status report.

In another possible implementation, the first indication information may alternatively be implemented by using another field in the frame structure shown in Table 2 and in a manner of adding a field to the another field, to indicate that the second status report is a "PTP" status report.

For example, in Design A, if the CU determines to send the first PDCP PDU to the first terminal device in the PTM mode, and determines to send the first PDCP PDU to the second terminal device in the PTP mode, assuming that the CU first receives the first status report, the CU may determine, based on the first indication information, that the first status report is a status report of the first terminal device, and further needs to wait for the second status report, namely, a status report of the second terminal device; or assuming that the CU first receives the second status report, the CU may determine, based on the second indication information, that the second status report is a status report of the second terminal device, and further needs to wait for the first status report, namely, a status report of the first terminal device.

With reference to Design 3 above, the first status report and the second status report may include the following Design B.

Design B: The first status report carries ninth indication information, and the ninth indication information indicates that the first status report corresponds to the RLC AM. It should be noted that "the first status report corresponds to the RLC AM" means that the first status report is an "RLC AM" status report, to be specific, the first status report is a combination of status reports of terminal devices to which the DU sends the first PDCP PDU by using the RLC AM.

In a possible implementation, the ninth indication information may reuse the index, for example, "Highest Delivered NR PDCP SN Ind", "Delivered NR PDCP SN Range Ind", or another index, in Table 2 to indicate that the first status report is an "AM" status report. This is not limited in this application.

In another possible implementation, the ninth indication information may use the "Highest successfully delivered NR PDCP Sequence Number" field in the frame structure shown in Table 2, to indicate that the first status report is an "RLC AM" status report.

In still another possible implementation, the ninth indication information may explicitly indicate, in a manner of adding an additional field "AM", that the first status report is an "RLC AM" status report. For example, an index or a field is newly defined.

In yet another possible implementation, the ninth indication information may alternatively be implemented by using another field in the frame structure shown in Table 2 and in a manner of adding a field to the another field, to indicate that the first status report is an "RLC AM" status report.

The second status report carries tenth indication information, and the tenth indication information indicates that the second status report corresponds to the RLC UM. It should be noted that "the second status report corresponds to the RLC UM" means that the second status report is an "RLC UM" status report, to be specific, the second status report is a combination of status reports of terminal devices to which the DU sends the first PDCP PDU by using the RLC UM.

In a possible implementation, the tenth indication information may reuse the index, for example, "Highest Transmitted NR PDCP SN Ind" or another index, in Table 2 to indicate that the second status report is an "RLC UM" status report. This is not limited in this application.

In another possible implementation, the tenth indication information may use the "Highest transmitted NR PDCP Sequence Number" field in the frame structure shown in Table 2, to implicitly indicate that the second status report is an "RLC UM" status report.

In still another possible implementation, the tenth indication information may explicitly indicate, in a manner of adding an additional field "UM", that the second status report is an "RCL UM" status report. For example, an index or a field is newly defined.

In yet another possible implementation, the tenth indication information may alternatively be implemented by using another field in the frame structure shown in Table 2 and in a manner of adding a field to the another field, to indicate that the second status report is an "RLC UM" status report.

For example, in Design B, if the CU determines to send the first PDCP PDU to the first terminal device by using the RLC AM, and determines to send the first PDCP PDU to the second terminal device by using the RLC UM, assuming that the CU first receives the first status report, the CU may determine, based on the first indication information, that the first status report is a status report of the first terminal device, and further needs to wait for the second status report, namely, a status report of the second terminal device; or assuming that the CU first receives the second status report, the CU may determine, based on the second indication information, that the second status report is a status report of the second terminal device, and further needs to wait for the first status report, namely, a status report of the first terminal device.

Further, with reference to Design 3, the first status report may include a sixth status report and a seventh status report.

The sixth status report and the seventh status report may include the following Design a and Design b.

Design a: The sixth status report carries eleventh indication information, and the eleventh indication information indicates that the sixth status report is a combination of status reports of terminal devices that use an in-sequence RLC AM and that are in the first terminal device. The seventh status report carries twelfth indication information, and the twelfth indication information indicates that the seventh status report is a combination of status reports of terminal devices that use an out-of-sequence RLC AM and that are in the first terminal device.

The eleventh indication information may use the "the highest NR PDCP PDU sequence number successfully delivered in sequence to the UE" field in the frame structure shown in Table 2, to indicate that the sixth status report is an "in-sequence AM" status report. Alternatively, the index, for example, "Highest Delivered NR PDCP SN Ind" or another index, in Table 2 may be reused to indicate that the sixth status report is an "in-sequence AM" status report. This is not limited in this application.

The twelfth indication information may use the "Number/Start/End of successfully delivered out of sequence PDCP Sequence Number range" field in the frame structure shown in Table 2, to indicate that the seventh status report is an "out-of-sequence AM" status report. Alternatively, the index, for example, "Delivered NR PDCP SN Range Ind" or another index, in Table 2 may be reused to indicate that the seventh status report is an "out-of-sequence AM" status report. This is not limited in this application either.

Optionally, a field may be separately added to the eleventh indication information and/or the twelfth indication information for indication. This is not specifically limited in this application.

In this design, the DU receives the sixth status report, and may determine, based on the eleventh indication information, that the current status report is an "in-sequence" status report, to be specific, the status report is a combination of status reports of terminal devices to which the DU delivers the first PDCP PDU in sequence by using the RCL AM, or an "out-of-sequence" status report, to be specific, the status report is a combination of status reports of terminal devices to which the DU delivers the first PDCP PDU out of sequence by using the RLC AM.

Design b: The sixth status report carries thirteenth indication information, and the thirteenth indication information indicates whether the sixth status report includes status reports of all terminal devices that are in the first terminal device, in other words, whether the sixth status report is a combination of status reports of all terminal devices that are in the first terminal device; and/or the seventh status report carries thirteenth indication information, and the thirteenth indication information indicates whether the seventh status report includes status reports of all terminal devices that are in the first terminal device, in other words, whether the seventh status report is a combination of status reports of all terminal devices that are in the first terminal device.

For example, the sixth status report is used as an example. The thirteenth indication information may be in a form of adding a "complete" field. If the field is "0", it indicates that the status report is incomplete, to be specific, the sixth status report is not a combination of status reports of all terminal devices that are in the first terminal device. If the field is "1", it indicates that the status report is complete, to be specific, the sixth status report is a combination of status reports of all terminal devices that are in the first terminal device.

Optionally, the CU may determine, based on the foregoing Design a, only a type of the status report, to be specific, whether the status report is an "in-sequence" status report or an "out-of-sequence" status report. However, the CU cannot determine whether the status report is a combination of status reports of all terminal devices that are in the first terminal device. Therefore, the CU may determine, with reference to Design a and Design b, whether the received status report is complete.

For example, assuming that the CU first receives the sixth status report, determines, based on the eleventh indication information, that the status report is an "in-sequence" status report, and determines, based on the thirteenth indication information, that the status report is incomplete, to be specific, the status report is not status reports of all terminal devices that use the RLC AM and that are in the first terminal device, the CU may determine that the CU further needs to wait for an "out-of-sequence" status report.

For example, assuming that the CU first receives the seventh status report, determines, based on the twelfth indication information, that the status report is an "out-of-sequence" status report, and determines, based on the thirteenth indication information, that the status report is complete, the CU may determine that the CU does not need to continue to wait for an "in-sequence" status report.

With reference to Design A and Design B above, the first status report and the second status report may further include the following Design C.

Design C: The first status report carries third indication information, and the third indication information indicates whether the first status report includes status reports of all terminal devices that are in the at least two terminal devices, in other words, whether the first status report is a combination of status reports of all terminal devices that are in the at least two terminal devices; and/or
the second status report carries third indication information, and the third indication information indicates whether the second status report includes status reports of all terminal devices that are in the at least two terminal devices, in other words, whether the second status report is a combination of status reports of all terminal devices that are in the at least two terminal devices.

Similarly, the third indication information may alternatively be implemented in the foregoing manner of the thirteenth indication information. Details are not described herein again.

For example, in the design, with reference to the foregoing Design A, if the DU determines or the DU and the CU jointly determine to send the first PDCP PDU to the first terminal device in the PTM mode, and determines to send the first PDCP PDU to the second terminal device in the PTP mode, assuming that the CU first receives the first status report, the CU may determine, based on the first indication information, only that the first status report is a combination of status reports of the first terminal device, but the CU cannot determine whether there is still the second terminal device, in other words, cannot determine whether the CU needs to wait for the second status report. In this case, with reference to Design C, the CU may determine, based on the third indication information, whether the first status report is complete, to be specific, whether the first status report is a combination of status reports of all terminal devices. If the first status report is complete, the CU may determine that the CU does not need to continue to wait for the second status report. If the first status report is incomplete, the CU may determine that the CU needs to wait for the second status report.

For example, in the design, with reference to the foregoing Design B, if the DU determines or the DU and the CU jointly determine to send the first PDCP PDU to the first terminal device by using the RLC AM, and determines to send the first PDCP PDU to the second terminal device by using the RLC UM, assuming that the CU first receives the first status report, the CU cannot determine whether there is still the second terminal device, in other words, cannot determine whether the CU needs to wait for the second status report. In this case, with reference to Design C, the CU may determine, based on the third indication information, whether the first status report is complete, to be specific, whether the first status report is a combination of status reports of all terminal devices. If the first status report is complete, the CU may determine that the CU does not need to continue to wait for the second status report. If the first status report is incomplete, the CU may determine that the CU needs to wait for the second status report.

For example, in this design, regardless of whether the CU determines, or the DU determines, or the CU and the DU jointly determine a mode of sending the first PDCP PDU to the first terminal device and the second terminal device, assuming that the CU first receives the first status report, the CU may determine, based only on the third indication information, whether the first status report is complete. If the third indication information indicates that the first status report is complete, the CU determines that the CU does not need to continue to wait for another status report; if the third indication information indicates that the first status report is incomplete, the CU may determine that the CU needs to continue to wait for another status report.

Optionally, in the foregoing Design 1, the status report may include the following Design D.

Design D: The status report carries fourth indication information, and the fourth indication information indicates that the status report corresponds to the RLC UM. It should be noted that "the status report corresponds to the RLC UM" means that the status report is an "RLC UM" status report, to be specific, the status report is a combination of status reports of terminal devices to which the CU sends the first PDCP PDU by using the RLC UM.

Optionally, the fourth indication information may alternatively use an implementation of the tenth indication information. Details are not described herein again.

For example, in this design, if the CU determines to send the first PDCP PDU to the at least two terminal devices by using the RLC UM, assuming that the CU receives the status report, the CU may determine, based only on the fourth indication information, that the status report is complete, in other words, the status report is a combination of status reports of all terminal devices, and the CU may determine that the CU does not need to continue to wait for another status report.

If the DU determines or the DU and the CU jointly determine to send the first PDCP PDU to the at least two terminal devices by using the RLC UM, assuming that the CU receives the status report, the CU cannot determine, based only on the fourth indication information, whether the status report is complete. In this case, if there is a third terminal device, and the third terminal device is at least one terminal device other than the at least two terminal devices, in other words, the DU sends the first PDCP PDU to the third terminal device and the at least two terminal devices, the status report is to further carry a "complete" indication, to be specific, whether the status report is a combination of status reports of all terminal devices to which the DU sends the first PDCP PDU. If the indication indicates that the status report is complete, the CU determines that the CU does not need to continue to wait for another status report; if the indication indicates that the status report is incomplete, the CU determines that the CU needs to continue to wait for another status report.

Optionally, the "complete" indication may alternatively be implemented in the foregoing manner of the thirteenth indication information. Details are not described herein again.

For example, in this design, regardless of whether the CU determines, or the DU determines, or the CU and the DU jointly determine a mode of sending the first PDCP PDU to the first terminal device and the second terminal device, assuming that the CU receives the status report, the CU may determine, based only on the "complete" indication carried in the status report, whether the status report is complete. If the indication indicates that the status report is complete, the CU determines that the CU does not need to continue to wait for another status report; if the indication indicates that the status report is incomplete, the CU may determine that the CU needs to continue to wait for another status report.

Optionally, in the foregoing Design 2, the status report may include the following Design E.

Design E: The status report carries first indication information, and the first indication information indicates that the status report corresponds to the PTM mode. "The status report corresponds to the PTM mode" means that the status report is a "PTM" status report, to be specific, the status report is a combination of status reports of terminal devices to which the DU sends the first PDCP PDU in the PTM mode.

For example, in this design, if the CU determines to send the first PDCP PDU to the at least two terminal devices in the PTM mode, assuming that the CU receives the status report, the CU may determine, based only on the first indication information, that the status report is complete, in other words, the status report is a combination of status reports of all terminal devices, and the CU may determine that the CU does not need to continue to wait for another status report.

Other cases are the same as the foregoing Design D, and details are not described herein again.

Optionally, the status report, the first status report, and the second status report may further carry any one or more of the following information (1) to (5).

(1) Fifth indication information, where the fifth indication information indicates a desired buffer size of a radio bearer RB associated with the MBS.

Optionally, the CU may determine, based on the fifth indication information, the desired buffer size of the radio bearer RB associated with the MBS. An action performed by the CU may be performed by the processor 401 of the communication apparatus 400 by invoking the application program code stored in the memory 403, or performed by the processing module 501 of the communication apparatus 500.

In a possible implementation, the fifth indication information may be implemented in a manner of adding an "MBS" indication to the "Desired buffer size for the data radio bearer" field in the frame structure shown in Table 2.

In another possible implementation, the fifth indication information may be implemented in a manner of directly modifying the "Desired buffer size for the data radio bearer" field in the frame structure shown in Table 2 to a "Desired buffer size for the MBS radio bearer" field, or modifying the "Desired buffer size for the data radio bearer" field to a "Desired buffer size for the concerned MRB" field.

In still another possible implementation, the fifth indication information may be implemented in a manner of independently adding a "Desired buffer size for the MBS radio bearer" field or a "Desired buffer size for the concerned MRB" field.

Implementation of the fifth indication information is not limited in this application.

(2) Sixth indication information, where the sixth indication information indicates a desired data rate.

Optionally, the CU may determine the desired data rate based on the sixth indication information. An action performed by the CU may be performed by the processor 401 of the communication apparatus 400 by invoking the application program code stored in the memory 403, or performed by the processing module 501 of the communication apparatus 500.

For example, the sixth indication information may be implemented as the "Desired Data Rate" field in the frame structure shown in Table 2. Alternatively, the sixth indication information may be alternatively implemented in another manner. This is not limited in this application.

For example, when the CU receives a plurality of status reports, for example, when the CU receives the first status report and the second status report, in an example in which the CU determines the desired data rate, assuming that both the first status report and the second status report carry the sixth indication information, the CU may determine the desired data rate based on the sixth indication information of a status report that is received first. For example, assuming that the CU first receives the first status report, the CU may determine the desired data rate based on the sixth indication information of the first status report; assuming that the CU first receives the second status report, the CU may determine the desired data rate based on the sixth indication information of the second status report.

For example, when the CU receives a plurality of status reports, assuming that the plurality of status reports include a status report of the foregoing "reporting a DDDS for a single UE" and also include the status report (a status report of "reporting a DDDS for a plurality of UEs") provided in embodiments of this application, the CU may choose to determine the desired data rate based on the sixth indication information carried in the status report provided in embodiments of this application. Alternatively, the CU may further determine the desired data rate based on related indication information in the status report of "reporting a DDDS for a single UE".

Optionally, a manner in which the CU determines a desired buffer size of a radio bearer RB associated with the MBS may be similar to a manner in which the CU determines the desired data rate, and details are not described herein again.

(3) Seventh indication information, where the seventh indication information indicates a highest sequence number SN of at least one PDCP PDU that is successfully sent by the DU and that is in the first PDCP PDU.

For example, the seventh indication information may be specifically implemented as the "Highest successfully delivered NR PDCP Sequence Number" field, the "Highest transmitted NR PDCP Sequence Number" field, the "the highest NR PDCP PDU sequence number successfully delivered in sequence to the UE" field, or the like in the frame structure shown in Table 2.

(4) Eighth indication information, where the eighth indication information indicates a quantity and a start SN of the at least one PDCP PDU that is successfully sent by the DU and that is in the first PDCP PDU, or the eighth indication information indicates a quantity and an end SN of the at least one PDCP PDU that is successfully sent by the DU and that is in the first PDCP PDU, or the eighth indication information indicates a start SN and an end SN of the at least one PDCP PDU that is successfully sent by the DU and that is in the first PDCP PDU, or the eighth indication information indicates a quantity, a start SN, and an end SN of the at least one PDCP PDU that is successfully sent by the DU and that is in the first PDCP PDU.

For example, the eighth indication information may be specifically implemented in any combination manner of three fields: the "Number of successfully delivered out of sequence PDCP Sequence Number range" field, the "Start of successfully delivered out of sequence PDCP Sequence Number range" field, and the "End of successfully delivered out of sequence PDCP Sequence Number range" field in the frame structure shown in Table 2.

(5) Bitmap (bitmap), where the bitmap indicates the results of sending the first PDCP PDU to the at least two terminal devices.

For example, the bitmap may be implemented in a manner of newly defining an index in the frame structure shown in Table 2. Assuming that the index is "0", in other words, the index does not exist, the status report does not carry a related field of the bitmap. If the index is "1", the status report may carry a related field of the bitmap. A specific implementation of the bitmap is not limited in this application.

For example, the bitmap may be shown in FIG. 8, and sending results are [1, 1, 0, 0, 0, 1, 1, 0]. It is assumed that the first PDCP PDU includes eight PDCP PDUs with SN 1 to SN 8. For example, the at least two terminal devices include three terminal devices: UE 1 to UE 3. SN 1, SN 4, SN 6, and SN 8 are sent by the DU to UE 1, UE 2, and UE 3 in the PTP mode. SN 2, SN 3, SN 5, and SN 7 are sent by the DU to UE 1, UE 2, and UE 3 in the PTM mode. SN 1 is successfully sent to UE 1, UE 2, and UE 3, and " 1" indicates that SN 1 is successfully sent. SN 2, SN 2, SN 6, and SN 7 are successfully sent to UE 1, UE 2, and UE 3, and " 1 "s indicate that PDCP PDUs are successfully sent. SN 3 fails to be sent to the three UEs, and "0" indicates that SN 3 fails to be sent. Similarly, "0"s indicate that SN 4, SN 5, and SN 8 also fail to be sent.

For PDCP PDUs carried on the MRB, different PDCP PDUs may separately correspond to the PTP mode and the PTM mode. Therefore, feeding back a PDCP PDU sending status based on the bitmap can avoid the following problem: When a highest SN indicated in a status report corresponding to the PTP mode and a highest SN indicated in a status report corresponding to the PTM mode are not the same, the CU cannot determine which highest SN is to be used, and it is difficult to make a decision.

Optionally, the CU may determine, based on the seventh indication information, the eighth indication information, or the bitmap, the highest SN of the at least one PDCP PDU that is successfully sent and that is in the first PDCP PDU An action performed by the CU may be performed by the processor 401 of the communication apparatus 400 by invoking the application program code stored in the memory 403, or performed by the processing module 501 of the communication apparatus 500.

For example, when the DU receives the plurality of status reports, for example, when the DU receives the first status report and the second status report, assuming that both the first status report and the second status report carry the seventh indication information, the seventh indication information carried in the first status report indicates that a highest SN of at least one PDCP PDU successfully sent by the DU is 8, and the seventh indication information carried in the second status report indicates that a highest SN of at least one PDCP PDU successfully sent by the DU is 5, the DU may select the highest SN in both highest SNs, in other words, the CU determines "8" as the highest SN of the at least one PDCP PDU that is successfully sent and that is in the first PDCP PDU

Optionally, the method shown in FIG. 7 may further include the following steps (not shown in the figure).

S704: The DU sends a third status report to the CU, and correspondingly, the CU receives the third status report sent by the DU, where
in step S704, an action performed by the CU may be performed by the communication interface 404 of the communication apparatus 400 and the communication module 502 of the communication apparatus 500; or an action performed by the DU may be performed by the communication interface 404 of the communication apparatus 400 and the communication module 502 of the communication apparatus 500, where
the third status report is a status report dedicated to feeding back the desired buffer size of the RB associated with the MBS; and/or

S705: The DU sends a fourth status report to the CU, and correspondingly, the CU receives the fourth status report sent by the DU, where
in step S705, an action performed by the CU may be performed by the communication interface 404 of the communication apparatus 400 and the communication module 502 of the communication apparatus 500; or an action performed by the DU may be performed by the communication interface 404 of the communication apparatus 400 and the communication module 502 of the communication apparatus 500, where
the fourth status report is a status report dedicated to feeding back the desired data rate; and/or

S706: The DU sends a fifth status report to the CU, and correspondingly, the DU receives the fifth status report sent by the CU.

The fifth status report is a status report dedicated to feeding back the desired buffer size of the RB associated with the MBS and the desired data rate.

In step S706, an action performed by the CU may be performed by the communication interface 404 of the communication apparatus 400 and the communication module 502 of the communication apparatus 500. Alternatively, an action performed by the DU may be performed by the communication interface 404 of the communication apparatus 400 and the communication module 502 of the communication apparatus 500.

Optionally, the CU may determine, based on the third status report, the status report of the desired buffer size of the RB associated with the MBS, and may determine the desired data rate based on the fourth status report; or may determine, based on the fifth status report, the desired buffer size of the RB associated with the MBS and the desired data rate. Optionally, the status report, the first status report, and the second status report may further carry other information, for example, related information, indicating a packet loss status, such as "Number of lost NR-U Sequence Number ranges reported", "Start of lost NR-U Sequence Number range", and "End of lost NR-U Sequence Number range" in the frame structure shown in Table 2. The CU may further determine a packet loss status of the first PDCP PDU based on the information.

Optionally, embodiments of this application further provide a computer-readable storage medium. The computer-readable storage medium stores computer instructions. When the computer instructions are run on a computer, the computer is enabled to perform the method described in the foregoing embodiment.

Optionally, embodiments of this application further provide a computer program product that carries computer instructions. When the computer instructions are run on a computer, the computer is enabled to perform the method described in the foregoing embodiment.

Optionally, embodiments of this application further provide a chip, including a processing circuit and a transceiver pin. The processing circuit and the transceiver pin are configured to implement the method described in the foregoing embodiment. The processing circuit is configured to perform a processing action in the corresponding method, and the transceiver pin is configured to perform a receiving/sending action in the corresponding method.

A person of ordinary skill in the art may understand that all or some of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid-State Drive, SSD)), or the like.

In the several embodiments provided in this application, it should be understood that the disclosed system, apparatuses, and method may be implemented in other manners. For example, the described apparatus embodiments are merely examples. For example, division into the modules is merely logical function division and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate parts may or may not be physically separate, and parts displayed as units may or may not be physical units, that is, may be located in one position, or may be distributed on a plurality of devices. Some or all of the units may be selected based on actual requirements to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions in this application essentially or the contributing part may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, wherein the method comprises:
receiving, by a distributed unit DU, a first packet data convergence protocol PDCP packet data unit PDU from a central unit CU, wherein the first PDCP PDU carries data of a multicast broadcast service MBS;
sending, by the DU, the first PDCP PDU to at least two terminal devices; and
sending, by the DU, a status report to the CU, wherein the status report indicates results of sending the first PDCP PDU by the DU to the at least two terminal devices.

2. The method according to claim 1, wherein the status report is a downlink data delivery status, the downlink delivery status comprises a first field, and the first field indicates the results of sending the first PDCP PDU by the DU to the at least two terminal devices.

3. The method according to claim 1 or 2, wherein the sending, by the DU, the first PDCP PDU to at least two terminal devices comprises:
sending, by the DU, the first PDCP PDU to the at least two terminal devices by using a radio link control RLC unacknowledged mode UM.

4. The method according to claim 1 or 2, wherein the sending, by the DU, the first PDCP PDU to at least two terminal devices comprises:
sending, by the DU, the first PDCP PDU to the at least two terminal devices in a point-to-multipoint PTM mode.

5. The method according to claim 1 or 2, wherein the sending, by the DU, the first PDCP PDU to at least two terminal devices comprises:
sending, by the DU, the first PDCP PDU to a first terminal device in the at least two terminal devices by using an RLC acknowledged mode AM, wherein the first terminal device comprises at least one terminal device; and
sending, by the DU, the first PDCP PDU to a second terminal device in the at least two terminal devices by using an RLC UM, wherein the second terminal device comprises at least one terminal device, wherein
the status report indicates the result of sending the first PDCP PDU to the first terminal device and the result of sending the first PDCP PDU to the second terminal device.

6. The method according to claim 5, wherein the sending, by the DU, a status report to the CU comprises:
sending, by the DU, a first status report to the CU, wherein the first status report indicates the result of sending the first PDCP PDU to the first terminal device; and
sending, by the DU, a second status report to the CU, wherein the second status report indicates the result of sending the first PDCP PDU to the second terminal device.

7. The method according to claim 6, wherein the first status report carries first indication information, and the first indication information indicates that the first status report corresponds to a PTM mode; and
the second status report carries second indication information, and the second indication information indicates that the second status report corresponds to a PTP mode.

8. The method according to claim 6 or 7, wherein the first status report carries third indication information, and the third indication information indicates whether the first status report comprises status reports of all terminal devices that are in the at least two terminal devices; and/or
the second status report carries third indication information, and the third indication information indicates whether the second status report comprises status reports of all terminal devices that are in the at least two terminal devices.

9. The method according to claim 3 or 4, wherein the status report carries fourth indication information, and the fourth indication information indicates that the status report corresponds to the RLC UM.

10. The method according to claim 4, wherein the status report carries first indication information, and the first indication information indicates that the status report corresponds to the PTM mode.

11. The method according to any one of claims 6 to 10, wherein the status report carries fifth indication information, and the fifth indication information indicates a desired buffer size of a radio bearer RB associated with the MBS;
the first status report carries fifth indication information, and the fifth indication information indicates a desired buffer size of an RB associated with the MBS; and/or
the second status report carries fifth indication information, and the fifth indication information indicates a desired buffer size of an RB associated with the MBS.

12. The method according to any one of claims 6 to 11, wherein the status report carries sixth indication information, and the sixth indication information indicates a desired data rate;
the first status report carries sixth indication information, and the sixth indication information indicates a desired data rate; and/or
the second status report carries sixth indication information, and the sixth indication information indicates a desired data rate.

13. The method according to any one of claims 6 to 12, wherein the first PDCP PDU comprises one or more PDCP PDUs, the status report carries seventh indication information, and the seventh indication information indicates a highest sequence number SN of at least one PDCP PDU that is successfully sent by the DU and that is in the first PDCP PDU;
the first status report carries seventh indication information, and the seventh indication information indicates a highest SN of at least one PDCP PDU that is successfully sent by the DU and that is in the first PDCP PDU; and/or
the second status report carries seventh indication information, and the seventh indication information indicates a highest SN of at least one PDCP PDU that is successfully sent by the DU and that is in the first PDCP PDU.

14. A data transmission method, wherein the method comprises:
sending, by a CU, a first PDCP PDU to a DU, wherein the first PDCP PDU carries data of an MBS; and
receiving, by the CU, a status report from the DU, wherein the status report indicates results of sending the first PDCP PDU by the DU to at least two terminal devices.

15. The method according to claim 14, wherein the status report is a downlink data delivery status, the downlink data delivery status comprises a first field, and the first field indicates the results of sending the first PDCP PDU by the DU to the at least two terminal devices.

16. The method according to claim 14 or 15, wherein the receiving, by the CU, a status report from the DU comprises:
receiving, by the CU, a first status report from the DU, wherein the first status report indicates the result of sending the first PDCP PDU to a first terminal device in the at least two terminal devices, and the first terminal device comprises at least one terminal device; and
receiving, by the CU, a second status report from the DU, wherein the second status report indicates the result of sending the first PDCP PDU to a second terminal device in the at least two terminal devices, and the second terminal device comprises at least one terminal device.

17. The method according to claim 16, wherein the first status report carries first indication information, and the first indication information indicates that the first status report corresponds to a PTM mode; and
the second status report carries second indication information, and the second indication information indicates that the second status report corresponds to a PTP mode.

18. The method according to claim 16 or 17, wherein the first status report carries third indication information, and the third indication information indicates whether the first status report comprises status reports of all terminal devices that are in the at least two terminal devices; and/or
the second status report carries third indication information, and the third indication information indicates whether the second status report comprises status reports of all terminal devices that are in the at least two terminal devices.

19. The method according to any one of claims 14 to 18, wherein the status report carries fourth indication information, and the fourth indication information indicates that the status report corresponds to an RLC UM.

20. The method according to any one of claims 14 to 16, wherein the status report carries first indication information, and the first indication information indicates that the status report corresponds to a PTM mode.

21. The method according to any one of claims 16 to 20, wherein the status report carries fifth indication information, and the fifth indication information indicates a desired buffer size of an RB associated with the MBS;
the first status report carries fifth indication information, and the fifth indication information indicates a desired buffer size of an RB associated with the MBS; and/or
the second status report carries fifth indication information, and the fifth indication information indicates a desired buffer size of an RB associated with the MBS.

22. The method according to any one of claims 16 to 21, wherein the status report carries sixth indication information, and the sixth indication information indicates a desired data rate;
the first status report carries sixth indication information, and the sixth indication information indicates a desired data rate; and/or
the second status report carries sixth indication information, and the sixth indication information indicates a desired data rate.

23. The method according to any one of claims 16 to 22, wherein the first PDCP PDU comprises one or more PDCP PDUs, the status report carries seventh indication information, and the seventh indication information indicates a highest SN of at least one PDCP PDU that is successfully sent by the DU and that is in the first PDCP PDU;
the first status report carries seventh indication information, and the seventh indication information indicates a highest SN of at least one PDCP PDU that is successfully sent by the DU and that is in the first PDCP PDU; and/or
the second status report carries seventh indication information, and the seventh indication information indicates a highest SN of at least one PDCP PDU that is successfully sent by the DU and that is in the first PDCP PDU.

24. The method according to any one of claims 16 to 23, wherein the method further comprises:
determining, by the CU based on the fifth indication information carried in the status report, the desired buffer size of the RB associated with the MBS; and/or determining, by the CU, the desired data rate based on the sixth indication information carried in the status report;
determining, by the CU based on the fifth indication information carried in the first status report or the fifth indication information carried in the second status report, the desired buffer size of the RB associated with the MBS, and/or determining, by the CU, the desired data rate based on the sixth indication information carried in the first status or the sixth indication information carried in the second status report;
determining, by the CU based on a third status report, the desired buffer size of the RB associated with the MBS, and/or determining the desired data rate based on a fourth status report; or
determining, by the CU based on a fifth status report, the desired buffer size of the RB associated with the MBS and/or the desired data rate.

25. The method according to any one of claims 16 to 24, wherein the method further comprises:
determining, by the CU based on the seventh indication information carried in the status report, the first status report, or the second status report, the highest SN of the at least one PDCP PDU that is successfully sent and that is in the first PDCP PDU;
determining, by the CU based on eighth indication information carried in the status report, the first status report, or the second status report, the highest SN of the at least one PDCP PDU that is successfully sent and that is in the first PDCP PDU; or
determining, by the CU based on a bitmap carried in the status report, the first status report, or the second status report, the highest SN of the at least one PDCP PDU that is successfully sent and that is in the first PDCP PDU.

26. A communication apparatus, comprising a communication module, wherein
the communication module is configured to receive a first PDCP PDU from a CU, wherein the first PDCP PDU carries data of an MBS;
the communication module is further configured to send the first PDCP PDU to at least two terminal devices; and
the communication module is further configured to send a status report to the CU, wherein the status report indicates results of sending the first PDCP PDU by the communication apparatus to the at least two terminal devices.

27. The communication apparatus according to claim 26, wherein the status report is a downlink data delivery status, the downlink delivery status comprises a first field, and the first field indicates the results of sending the first PDCP PDU by the communication apparatus to the at least two terminal devices.

28. The communication apparatus according to claim 26 or 27, wherein
the communication module is further configured to send the first PDCP PDU to the at least two terminal devices by using an RLC UM.

29. The communication apparatus according to claim 26 or 27, wherein
the communication module is further configured to send the first PDCP PDU to the at least two terminal devices in a PTM mode.

30. The communication apparatus according to claim 26 or 27, wherein
the communication module is further configured to send the first PDCP PDU to a first terminal device in the at least two terminal devices by using an RLC AM, wherein the first terminal device comprises at least one terminal device;
the communication module is further configured to send the first PDCP PDU to a second terminal device in the at least two terminal devices by using an RLC UM, wherein the second terminal device comprises at least one terminal device; and
the status report indicates the result of sending the first PDCP PDU to the first terminal device and the result of sending the first PDCP PDU to the second terminal device.

31. The communication apparatus according to claim 30, wherein
the communication module is further configured to send a first status report to the CU, wherein the first status report indicates the result of sending the first PDCP PDU to the first terminal device; and
the communication module is further configured to send a second status report to the CU, wherein the second status report indicates the result of sending the first PDCP PDU to the second terminal device.

32. The communication apparatus according to claim 31, wherein the first status report carries first indication information, and the first indication information indicates that the first status report corresponds to a PTM mode; and
the second status report carries second indication information, and the second indication information indicates that the second status report corresponds to a PTP mode.

33. The communication apparatus according to claim 31 or 32, wherein the first status report carries third indication information, and the third indication information indicates whether the first status report comprises status reports of all terminal devices that are in the at least two terminal devices; and/or
the second status report carries third indication information, and the third indication information indicates whether the second status report comprises status reports of all terminal devices that are in the at least two terminal devices.

34. The communication apparatus according to claim 28 or 29, wherein the status report carries fourth indication information, and the fourth indication information indicates that the status report corresponds to the RLC UM.

35. The communication apparatus according to claim 29, wherein the status report carries first indication information, and the first indication information indicates that the status report corresponds to the PTM mode.

36. The communication apparatus according to any one of claims 31 to 35, wherein the status report carries fifth indication information, and the fifth indication information indicates a desired buffer size of a radio bearer RB associated with the MBS;
the first status report carries fifth indication information, and the fifth indication information indicates a desired buffer size of an RB associated with the MBS; and/or
the second status report carries fifth indication information, and the fifth indication information indicates a desired buffer size of an RB associated with the MBS.

37. The communication apparatus according to any one of claims 31 to 36, wherein the status report carries sixth indication information, and the sixth indication information indicates a desired data rate;
the first status report carries sixth indication information, and the sixth indication information indicates a desired data rate; and/or
the second status report carries sixth indication information, and the sixth indication information indicates a desired data rate.

38. The communication apparatus according to any one of claims 31 to 37, wherein the first PDCP PDU comprises one or more PDCP PDUs, the status report carries seventh indication information, and the seventh indication information indicates a highest sequence number SN of at least one PDCP PDU that is successfully sent by the DU and that is in the first PDCP PDU;
the first status report carries seventh indication information, and the seventh indication information indicates a highest SN of at least one PDCP PDU that is successfully sent by the DU and that is in the first PDCP PDU; and/or
the second status report carries seventh indication information, and the seventh indication information indicates a highest SN of at least one PDCP PDU that is successfully sent by the DU and that is in the first PDCP PDU.

39. A communication apparatus, comprising a communication module, wherein
the communication module is configured to send a first PDCP PDU to a DU, wherein the first PDCP PDU carries data of an MBS; and
the communication module is further configured to receive a status report from the DU, wherein the status report indicates results of sending the first PDCP PDU by the DU to at least two terminal devices.

40. The communication apparatus according to claim 39, wherein the status report is a downlink data delivery status, the downlink data delivery status comprises a first field, and the first field indicates the results of sending the first PDCP PDU by the DU to the at least two terminal devices.

41. The communication apparatus according to claim 39 or 40, wherein
the communication module is further configured to receive a first status report from the DU, wherein the first status report indicates the result of sending the first PDCP PDU to a first terminal device in the at least two terminal devices, and the first terminal device comprises at least one terminal device; and
the communication module is further configured to receive a second status report from the DU, wherein the second status report indicates the result of sending the first PDCP PDU to a second terminal device in the at least two terminal devices, and the second terminal device comprises at least one terminal device.

42. The communication apparatus according to claim 41, wherein the first status report carries first indication information, and the first indication information indicates that the first status report corresponds to a PTM mode; and
the second status report carries second indication information, and the second indication information indicates that the second status report corresponds to a PTP mode.

43. The communication apparatus according to claim 41 or 42, wherein the first status report carries third indication information, and the third indication information indicates whether the first status report comprises status reports of all terminal devices that are in the at least two terminal devices; and/or
the second status report carries third indication information, and the third indication information indicates whether the second status report comprises status reports of all terminal devices that are in the at least two terminal devices.

44. The communication apparatus according to any one of claims 39 to 43, wherein the status report carries fourth indication information, and the fourth indication information indicates that the status report corresponds to an RLC UM.

45. The communication apparatus according to any one of claims 39 to 41, wherein the status report carries first indication information, and the first indication information indicates that the status report corresponds to a PTM mode.

46. The communication apparatus according to any one of claims 41 to 45, wherein the status report carries fifth indication information, and the fifth indication information indicates a desired buffer size of an RB associated with the MBS;
the first status report carries fifth indication information, and the fifth indication information indicates a desired buffer size of an RB associated with the MBS; and/or
the second status report carries fifth indication information, and the fifth indication information indicates a desired buffer size of an RB associated with the MBS.

47. The communication apparatus according to any one of claims 41 to 46, wherein the status report carries sixth indication information, and the sixth indication information indicates a desired data rate;
the first status report carries sixth indication information, and the sixth indication information indicates a desired data rate; and/or
the second status report carries sixth indication information, and the sixth indication information indicates a desired data rate.

48. The communication apparatus according to any one of claims 41 to 47, wherein the first PDCP PDU comprises one or more PDCP PDUs, the status report carries seventh indication information, and the seventh indication information indicates a highest SN of at least one PDCP PDU that is successfully sent by the DU and that is in the first PDCP PDU;
the first status report carries seventh indication information, and the seventh indication information indicates a highest SN of at least one PDCP PDU that is successfully sent by the DU and that is in the first PDCP PDU; and/or
the second status report carries seventh indication information, and the seventh indication information indicates a highest SN of at least one PDCP PDU that is successfully sent by the DU and that is in the first PDCP PDU.

49. The communication apparatus according to any one of claims 41 to 48, further comprising a processing module, wherein
the processing module is configured to: determine, based on the fifth indication information carried in the status report, the desired buffer size of the RB associated with the MBS; and/or determine the desired data rate based on the sixth indication information carried in the status report;
the processing module is configured to determine, based on the fifth indication information carried in the first status report or the fifth indication information carried in the second status report, the desired buffer size of the RB associated with the MBS, and/or the processing module is configured to determine the desired data rate based on the sixth indication information carried in the first status or the sixth indication information carried in the second status report;
the processing module is configured to: determine, based on a third status report, the desired buffer size of the RB associated with the MBS, and/or determine the desired data rate based on a fourth status report; or
the processing module is configured to: determine, based on a fifth status report, the desired buffer size of the RB associated with the MBS and/or the desired data rate.

50. The communication apparatus according to any one of claims 41 to 49, wherein
the processing module is further configured to determine, based on the seventh indication information carried in the status report, the first status report, or the second status report, the highest SN of the at least one PDCP PDU that is successfully sent and that is in the first PDCP PDU;
the processing module is further configured to determine, based on eighth indication information carried in the status report, the first status report, or the second status report, the highest SN of the at least one PDCP PDU that is successfully sent and that is in the first PDCP PDU; or
the processing module is further configured to determine, based on a bitmap carried in the status report, the first status report, or the second status report, the highest SN of the at least one PDCP PDU that is successfully sent and that is in the first PDCP PDU.

51. A computer-readable storage medium, wherein the computer-readable storage medium stores computer instructions; and when the computer instructions are run on a computer, the computer is enabled to perform the method according to any one of claims 1 to 13, or the computer is enabled to perform the method according to any one of claims 14 to 25.

52. A computer program product, wherein when the computer program product runs on a computer, the computer is enabled to perform the method according to any one of claims 1 to 13, or the computer is enabled to perform the method according to any one of claims 14 to 25.

53. A chip, wherein the chip comprises a processor; and when the processor executes instructions, the processor is configured to perform the method according to any one of claims 1 to 13, or the processor is configured to perform the method according to any one of claims 14 to 25.
